# EUROPEAN PATENT APPLICATION

(11) **EP 4 622 374 A1**
(43) Date of publication of application: **24.09.2025**
(21) Application number: 24762928.0
(22) Date of filing: 25.01.2024
(51) Int. Cl.: H04W 72/0453, H04L 1/00

(54) **COMMUNICATION METHOD AND APPARATUS**

(30) Priority: 28.02.2023 CN 202310216972
(71) Applicant: Huawei Technologies Co., Ltd., Shenzhen, Guangdong 518129 (CN)
(72) Inventor: MA, Yunsi, Shenzhen, Guangdong 518129 (CN); RUAN, Wei, Shenzhen, Guangdong 518129 (CN)
(74) Representative: Gill Jennings & Every LLP
(86) International application number: PCT/CN2024/074084
(87) International publication number: WO 2024/179245

(57) **Abstract**

A communication method and apparatus are provided. The method includes: A first device may send first data to a second device on a first channel. The first channel falls within a 5 GHz frequency band, and a bandwidth of the first channel is greater than or equal to 240 MHz. In this case, the first device may transmit data through a channel that is in the 5 GHz frequency band and that has a bandwidth greater than or equal to 240 MHz, so that a throughput can be improved, and a transmission capability of the first device can be improved.

## Description

### CROSS-REFERENCE TO RELATED APPLICATIONS

This application claims priority to Chinese Patent Application No. 202310216972.3, filed with the China National Intellectual Property Administration on February 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

At present, in a 5 gigahertz (GHz) frequency band, a maximum bandwidth of an unlicensed frequency band that may be used by a wireless fidelity (wireless fidelity, Wi-Fi) device is 160 megahertz (MHz). This cannot meet a high throughput requirement of a future Wi-Fi device, and affects a transmission capability of the Wi-Fi device.

### SUMMARY

This application provides a communication method and apparatus, to improve a transmission capability of a Wi-Fi device.

According to a first aspect, an embodiment of this application provides a communication method. The method may be applied to a first device or a chip in a first device. The first device may be a Wi-Fi device such as an AP or a STA. The following uses an example in which the method is applied to the first device for description. The method includes: The first device sends first data to a second device on a first channel. The first channel falls within a 5 GHz frequency band, and a bandwidth of the first channel is greater than or equal to 240 MHz. The first device may further receive second data from the second device.

According to this method, the first device may transmit data through a channel that is in the 5 GHz frequency band and that has a bandwidth greater than or equal to 240 MHz, so that a throughput can be improved, and a transmission capability of the first device can be improved.

In a possible design, the first device may further send a first message The first message may include first information indicating a bandwidth of a second channel. A relationship between a value of the first information and the bandwidth of the second channel may include at least one of the following: When the value of the first information is a first value, the bandwidth of the second channel is 160 MHz or 165 MHz; when the value of the first information is a second value, the bandwidth of the second channel is 240 MHz, or when the value of the first information is a third value, the bandwidth of the second channel is 320 MHz or 325 MHz. According to this design, the first device may indicate, to the second device, a width of the channel used to send data, so that the second device receives the data based on the width. In this way, an energy loss caused by blind detection performed by the second device can be reduced, and complexity of receiving the data by the second device is reduced.

In a possible design, the first message further includes at least one first subfield and at least one second subfield. The at least one first subfield and the at least one second subfield may jointly indicate an RU allocation scheme of the second channel. According to this design, the first device may indicate, to the second device, an RU allocation scheme of the channel used to send data, so that the second device receives the data based on the RU allocation scheme. In this way, the energy loss caused by blind detection performed by the second device can be reduced, and complexity of receiving the data by the second device is reduced.

In a possible design, a relationship between the value of the first information, the at least one first subfield, and the at least one second subfield may include at least one of the following: When the value of the first information is the first value, a quantity of first subfields in the at least one first subfield is 2, and a quantity of second subfields in the at least one second subfield is 2 or 3; when the value of the first information is the second value, a quantity of first subfields in the at least one first subfield is 2, and a quantity of second subfields in the at least one second subfield is 4; or when the value of the first information is the third value, a quantity of first subfields in the at least one first subfield is 2, and a quantity of second subfields in the at least one second subfield is 7. This design provides a plurality of possible implementations of the at least one first subfield and the at least one second subfield, and is easy to implement.

In a possible design, when the quantity of second subfields in the at least one second subfield is 3 or 7, one or more second subfields in the at least one second subfield correspond to a third channel, and a frequency range of the third channel falls within a frequency range of the second channel. According to this design, the first device may accurately indicate an RU allocation scheme of a channel whose bandwidth includes the frequency range of the third channel. For example, if a bandwidth of the third channel is 5 MHz, the first device may accurately indicate an RU allocation scheme of a channel whose bandwidth is 165 MHz or 325 MHz.

In a possible design, a frequency range of the first channel includes a first frequency range. The first device may send the first data to the second device by using a resource, on the first channel, other than a resource corresponding to the first frequency range. According to this design, the first device does not send data on the resource corresponding to the first frequency range, so that interference to a device using the first frequency range can be avoided.

In a possible design, a frequency range of a fourth channel includes the first frequency range. The first device may send third data to the second device by using a resource, on the fourth channel, other than a resource corresponding to the first frequency range. A bandwidth of the fourth channel is less than 240 MHz. According to this design, the first device does not send data on the resource corresponding to the first frequency range, so that interference to the device using the first frequency range can be avoided.

In a possible design, the frequency range of the third channel is a fifth frequency range. The third channel is used to transmit at least one of the following services: a QoS service and a time-sensitive service. According to this design, services such as the QoS service and/or the time-sensitive service may be preferentially transmitted through the third channel, so that transmission delays of these services can be reduced.

In a possible design, a frequency range of a fifth channel includes a first frequency range, and a bandwidth of the fifth channel is one of the following: 20 MHz, 40 MHz, 80 MHz, 160 MHz, 240 MHz and 320 MHz. In this design, the fifth channel may include the first frequency range. In this case, resources on the fifth channel may be consecutive. The first device may transmit data by using consecutive resources on the fifth channel, so that a data transmission delay can be reduced.

In a possible design, the first frequency range is one of the following: 5710 MHz to 5730 MHz, 5730 MHz to 5735 MHz, and 5710 MHz to 5735 MHz. This design is easy to implement.

In a possible design, the bandwidth of the second channel is 165 MHz, 240 MHz, or 325 MHz, and the second channel includes at least one of the following:
at least one first RU, where the first RU includes 26 consecutive subcarriers;
at least one second RU, where the second RU includes 52 consecutive subcarriers;
at least one third RU, where the third RU includes 106 consecutive subcarriers;
at least one fourth RU, where the fourth RU includes 242 consecutive subcarriers;
at least one fifth RU, where the fifth RU includes 484 subcarriers;
at least one sixth RU, where the sixth RU includes 996 subcarriers;
at least one seventh RU, where the seventh RU includes 2×996 subcarriers;
at least one eighth RU, where the eighth RU includes 3×996 subcarriers; and
at least one ninth RU, where the ninth RU includes 4×996 subcarriers.

This design can provide a plurality of RU allocation schemes on the second channel, so that the RU allocation scheme of the second channel can be flexibly determined.

In a possible design, the first device may send the first data on a sixth channel. The sixth channel includes a first bandwidth and a second bandwidth, and the first data is carried only on the first bandwidth. In this case, when the first device supports the first bandwidth, and the second device does not support the first bandwidth but supports a sum of the first bandwidth and the second bandwidth, the first device sends the first data by using the first bandwidth of the sixth channel, and the second device may correctly receive the first data through the sixth channel.

In a possible design, the first device is an access point. Before sending the first data on the sixth channel, the first device may send a beacon frame to the second device, where the beacon frame indicates the sixth channel.

Optionally, the first bandwidth is 240 MHz, and the second bandwidth is 80 MHz.

According to this design, when the first device supports the first bandwidth, and the second device does not support the first bandwidth but supports the sum of the first bandwidth and the second bandwidth, the first device may trigger, by using the beacon frame, the second device to receive the first data on the sixth channel, to avoid blind detection performed by the second device, and reduce energy consumption of the second device.

According to a second aspect, an embodiment of this application provides a communication method. The method may be applied to a second device or a chip in the second device. The second device may be a Wi-Fi device such as an AP or a STA. The following uses an example in which the method is applied to the second device for description. The method includes: The second device receives first data from a first device on a first channel. The first channel falls within a 5 GHz frequency band, and a bandwidth of the first channel is greater than or equal to 240 MHz. The second device may further send second data to the first device.

According to this method, the second device may receive data through a channel that is in the 5 GHz frequency band and that has a bandwidth greater than or equal to 240 MHz, so that a throughput can be improved, and a transmission capability of the second device can be improved.

In a possible design, the second device may receive a first message, and the first message may include first information indicating a bandwidth of a second channel. A relationship between a value of the first information and the bandwidth of the second channel may include at least one of the following: When the value of the first information is a first value, the bandwidth of the second channel is 160 MHz or 165 MHz; when the value of the first information is a second value, the bandwidth of the second channel is 240 MHz; or when the value of the first information is a third value, the bandwidth of the second channel is 320 MHz or 325 MHz. According to this design, the second device may learn of a width of the channel used to send data, and then may receive the data based on the width. In this way, an energy loss caused by blind detection performed by the second device is reduced, and complexity of receiving the data by the second device is reduced.

In a possible design, the first message further includes at least one first subfield and at least one second subfield. The at least one first subfield and the at least one second subfield jointly indicate an RU allocation scheme of the second channel. According to this design, the second device may learn of an RU allocation scheme of the channel used to send data, and then may receive the data based on the RU allocation scheme. In this way, an energy loss caused by blind detection performed by the second device can be reduced, and complexity of receiving the data by the second device is reduced.

In a possible design, a relationship between the value of the first information, the at least one first subfield, and the at least one second subfield may include at least one of the following: When the value of the first information is the first value, a quantity of first subfields in the at least one first subfield is 2, and a quantity of second subfields in the at least one second subfield is 2 or 3; when the value of the first information is the second value, a quantity of first subfields in the at least one first subfield is 2, and a quantity of second subfields in the at least one second subfield is 4; or when the value of the first information is the third value, a quantity of first subfields in the at least one first subfield is 2, and a quantity of second subfields in the at least one second subfield is 7. This design provides a plurality of possible implementations of the at least one first subfield and the at least one second subfield, and is easy to implement.

In a possible design, when the quantity of second subfields in the at least one second subfield is 3 or 7, one or more second subfields in the at least one second subfield correspond to a third channel, and a frequency range of the third channel falls within a frequency range of the second channel. According to this design, the second device may accurately learn of an RU allocation scheme of a channel whose bandwidth includes the frequency range of the third channel. For example, if a bandwidth of the third channel is 5 MHz, the first device may accurately indicate an RU allocation scheme of a channel whose bandwidth is 165 MHz or 325 MHz.

In a possible design, a frequency range of the first channel includes a first frequency range. The second device may receive the first data from the first device by using a resource, on the first channel, other than a resource corresponding to the first frequency range. According to this design, the second device does not receive data on the resource corresponding to the first frequency range, so that energy consumption of the second device can be reduced.

In a possible design, a frequency range of a fourth channel includes the first frequency range. The second device may receive third data from the first device by using a resource, on the fourth channel, other than a resource corresponding to the first frequency range. A bandwidth of the fourth channel is less than 240 MHz. According to this design, the second device does not receive data on the resource corresponding to the first frequency range, so that energy consumption of the second device can be reduced.

In a possible design, the frequency range of the third channel is a fifth frequency range. The third channel is used to transmit at least one of the following services: a quality of service QoS service and a time-sensitive service. According to this design, services such as the QoS service and/or the time-sensitive service may be preferentially transmitted through the third channel, so that transmission delays of these services can be reduced.

In a possible design, a frequency range of a fifth channel includes a first frequency range, and a bandwidth of the fifth channel is one of the following: 20 MHz, 40 MHz, 80 MHz, 160 MHz, 240 MHz and 320 MHz. In this design, the fifth channel may include the first frequency range. In this case, resources on the fifth channel may be consecutive. The second device may receive data by using consecutive resources on the fifth channel, so that a data transmission delay can be reduced.

In a possible design, the first frequency range is one of the following: 5710 MHz to 5730 MHz, 5730 MHz to 5735 MHz, and 5710 MHz to 5735 MHz. This design is easy to implement.

In a possible design, the bandwidth of the second channel is 165 MHz, 240 MHz, or 325 MHz, and the first channel includes at least one of the following:
at least one first RU, where the first RU includes 26 consecutive subcarriers;
at least one second RU, where the second RU includes 52 consecutive subcarriers;
at least one third RU, where the third RU includes 106 consecutive subcarriers;
at least one fourth RU, where the fourth RU includes 242 consecutive subcarriers;
at least one fifth RU, where the fifth RU includes 484 consecutive subcarriers;
at least one sixth RU, where the sixth RU includes 996 subcarriers;
at least one seventh RU, where the seventh RU includes 2×996 subcarriers;
at least one eighth RU, where the eighth RU includes 3×996 subcarriers; and
at least one ninth RU, where the ninth RU includes 4×996 subcarriers.

This design can provide a plurality of RU allocation schemes on the second channel, so that the RU allocation scheme of the second channel can be flexibly determined.

In a possible design, the second device receives the first data on a sixth channel. The sixth channel includes a first bandwidth and a second bandwidth, and the first data is carried only on the first bandwidth. In this case, when the first device supports the first bandwidth, and the second device does not support the first bandwidth but supports a sum of the first bandwidth and the second bandwidth, the first device sends the first data by using the first bandwidth of the sixth channel, and the second device may correctly receive the first data through the sixth channel.

In a possible design, the second device is a STA. Before receiving the first data on the sixth channel, the second device may receive a beacon frame from the first device, where the beacon frame indicates the sixth channel.

Optionally, the first bandwidth is 240 MHz, and the second bandwidth is 320 MHz.

According to this design, when the first device supports the first bandwidth, and the second device does not support the first bandwidth but supports the sum of the first bandwidth and the second bandwidth, the first device may trigger, by using the beacon frame, the second device to receive the first data on the sixth channel, to avoid blind detection performed by the second device, and reduce energy consumption of the second device.

According to a third aspect, an embodiment of this application provides a communication apparatus, including units configured to perform the steps in any one of the foregoing aspects.

According to a fourth aspect, an embodiment of this application provides a communication apparatus, including at least one processing element and at least one storage element. The at least one storage element is configured to store a program and data, and the at least one processing element is configured to read and execute the program and data that are stored in the storage element, so that the method according to any one of the foregoing aspects of this application is implemented.

According to a fifth aspect, an embodiment of this application provides a communication system, including a first device configured to perform the method according to the first aspect, and a second device configured to perform the method according to the second aspect.

According to a sixth aspect, an embodiment of this application further provides a computer program. When the computer program is run on a computer, the computer is enabled to perform the method according to any one of the foregoing aspects.

According to a seventh aspect, an embodiment of this application further provides a computer-readable storage medium. The computer-readable storage medium stores a computer program. When the computer program is executed by a computer, the computer is enabled to perform the method according to any one of the foregoing aspects.

According to an eighth aspect, an embodiment of this application further provides a chip. The chip is configured to read a computer program stored in a memory, to perform the method according to any one of the foregoing aspects.

According to a ninth aspect, an embodiment of this application further provides a chip system. The chip system includes a processor configured to support a computer apparatus in implementing the method according to any one of the foregoing aspects. In a possible design, the chip system further includes a memory, and the memory is configured to store a program and data that are necessary for the computer apparatus. The chip system may include a chip, or may include a chip and another discrete device.

For technical effects that can be achieved by any one of the third aspect to the ninth aspect, refer to descriptions of technical effects that can be achieved by any possible design in any one of the first aspect or the second aspect. Repeated descriptions are not described again.

### BRIEF DESCRIPTION OF DRAWINGS

FIG. 1 is a diagram of a network architecture to which embodiments of this application are applicable;
FIG. 2 is a diagram of a possible PPDU structure according to an embodiment of this application;
FIG. 3 is a flowchart of a communication method according to an embodiment of this application;
FIG. 4A is a first diagram of channels according to an embodiment of this application;
FIG. 4B is a second diagram of channels according to an embodiment of this application;
FIG. 4C is a third diagram of channels according to an embodiment of this application;
FIG. 4D is a fourth diagram of channels according to an embodiment of this application;
FIG. 4E is a fifth diagram of channels according to an embodiment of this application;
FIG. 5A is a first diagram of RU allocation schemes according to an embodiment of this application;
FIG. 5B is a second diagram of RU allocation schemes according to an embodiment of this application;
FIG. 5C is a third diagram of RU allocation schemes according to an embodiment of this application;
FIG. 5D is a fourth diagram of RU allocation schemes according to an embodiment of this application;
FIG. 5E is a fifth diagram of RU allocation schemes according to an embodiment of this application;
FIG. 5F is a sixth diagram of RU allocation schemes according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following describes in detail embodiments of this application with reference to the accompanying drawings of this specification.

Embodiments of this application may be applicable to a local area network (local area network, LAN), and in particular, to a wireless local area network (wireless local area network, WLAN). For example, embodiments of this application may be applicable to a WLAN that uses any one of institute of electrical and electronics engineers (institute of electrical and electronics engineers, IEEE) 802 series protocols. The WLAN may include one or more basic service sets (basic service sets, BSSs). Network nodes in the basic service set include an access point (access point, AP) and a station (station, STA). In addition, based on an original BSS, the IEEE 802.11ad introduces a personal basic service set (personal basic service set, PBSS) and a personal basic service set control point (PBSS control point, PCP). The personal basic service set may include one AP/PCP and a plurality of non (non)-APs/non-PCPs associated with the AP/PCP. In embodiments of this application, the non-AP/non-PCP may be referred to as a STA, and the PCP may be understood as a name of a role of the AP in the PBSS.

Embodiments of this application may also be applicable to a wireless local area network such as an internet of things (internet of things, IoT) network or a vehicle-to-everything (Vehicle to X, V2X) network. Certainly, embodiments of this application may be further applicable to other possible communication systems, for example, a long term evolution (long term evolution, LTE) communication system, an LTE frequency division duplex (frequency division duplex, FDD) communication system, an LTE time division duplex (time division duplex, TDD) communication system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) communication system, and a future evolved communication system.

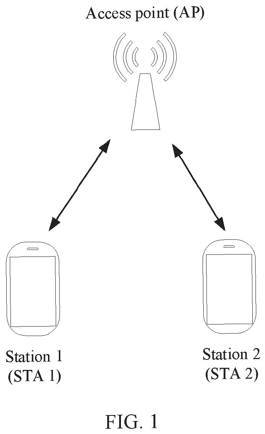

The following uses an example in which embodiments of this application are applicable to a WLAN. FIG. 1 is a diagram of a network architecture of a WLAN to which embodiments of this application are applicable. FIG. 1 uses an example in which the WLAN includes one AP and two STAs. A STA associated with the AP can receive a radio frame sent by the AP, and can also send a radio frame to the AP. In embodiments of this application, communication between the AP and the STA is used as an example for description. It may be understood that embodiments of this application may also be applicable to communication between APs. For example, the APs may communicate with each other by using a distributed system (distributed system, DS). Embodiments of this application may also be applicable to communication between STAs.

The AP may be an access point for the STA to enter a wired (or wireless) network. The AP is equivalent to a bridge that connects a wired network and a wireless network. A main function of the access point is to connect various wireless network clients together and then connect the wireless network to an Ethernet. Specifically, the AP may be a terminal device (such as a mobile phone) or a network device (such as a router) with a Wi-Fi chip. In embodiments of this application, the AP may be a device that supports an 802.11be standard, or may be a device that supports a plurality of WLAN standards of 802.11 series such as 802.11ax, 802.11ay, 802.11ac, 802.11n, 802.11g, 802.11b, 802.11a, and a next generation of 802.11be, and/or 802.18 series

The STA may also be referred to as a client or a workstation, and may be a wireless sensor, a wireless communication terminal, or the like. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, an in-vehicle communication device that supports a Wi-Fi communication function, a computer that supports a Wi-Fi communication function, or the like. Optionally, the STA may support the 802.11be standard, or may support a plurality of WLAN standards of the 802.11 series such as 802.11ax, 802.11ay, 802.11ac, 802.11n, 802.11g, 802.11b, 802.11a, and the next generation of 802.11be, and/or the 802.18 series.

It may be understood that, quantities of APs and STAs shown in FIG. 1 are merely examples, and may alternatively be more or less.

In this application, the AP and the STA may be collectively referred to as a Wi-Fi device. In other words, the Wi-Fi device may include the AP and/or the STA. In this application, a function of the AP may be performed by the AP, or may be performed by a module (for example, a chip) in the AP, or may be performed by a control subsystem including the function of the AP. A function of the STA may be performed by the STA, or may be performed by a module (such as a chip or a modem) in the STA, or may be performed by an apparatus including the function of the STA. The following uses an example in which the function of the AP is performed by the AP and the function of the STA is performed by the STA for description.

The network architecture and a service scenario described in this embodiment of this application are intended to describe technical solutions in embodiments of this application more clearly, and do not constitute a limitation on the technical solutions provided in embodiments of this application. A person of ordinary skill in the art may know that as the network architectures evolve and a new service scenario emerges, the technical solutions provided in embodiments of this application are also applicable to a similar technical problem.

For ease of understanding embodiments of this application, some terms in this application are first explained and described.
(1) Physical layer protocol data unit (physical layer protocol data unit, PPDU).

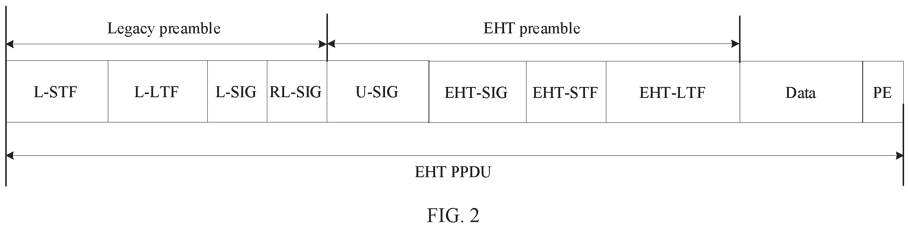

The following describes a possible PPDU structure with reference to FIG. 2. FIG. 2 is a diagram of a structure of an extremely high throughput (extremely high throughput, EHT) PPDU. As shown in FIG. 2, the EHT PPDU may include a legacy preamble (legacy preamble) part, an EHT preamble part, and a data part.

The legacy preamble part includes: a legacy-short training field (legacy-short training field, L-STF), a legacy-long training field (legacy-long training field, L-LTF), a legacy-signal field (legacy-signal field, L-SIG), and a repeated legacy-signal field (repeated legacy-signal field, RL-SIG).

The EHT preamble part includes: a universal signaling (universal SIG, U-SIG) field, an extremely high throughput signaling (extremely high throughput SIG, EHT-SIG) field, an extremely high throughput short training field (extremely high throughput short training field, EHT-STF), and an extremely high throughput long training field (extremely high throughput long training field, EHT-LTF). In a protocol such as 802.11be, the U-SIG field may include a bandwidth (bandwidth) subfield indicating a bandwidth of a channel of a Wi-Fi device. The EHT-SIG field may include a resource unit (resource unit, RU) allocation-1 (Allocation-1) subfield and an RU allocation-2 (Allocation-2) subfield. The RU Allocation-1 subfield and the RU Allocation-2 subfield may jointly indicate an RU allocation scheme of the Wi-Fi device.

The data part may include a data (data) field and a data packet extension (packet extension, PE) field.

It may be understood that, for meanings of the foregoing fields, refer to a standard protocol. The foregoing EHT PPDU is merely an example. In a standard formulation process or a technology development process, there may be another possible structure. This is not limited in this application.

(2) In this application, data may include any data transmitted between Wi-Fi devices. For example, the data may be service data or control data.

(3) Beacon (Beacon) frame is a management frame periodically sent in a wireless local area network. The beacon frame may be sent by an AP, and is used to announce existence of the wireless local area network. The beacon frame may include information about the wireless local area network, for example, may include a bandwidth of the wireless local area network.

(4) In this application, a guard subcarrier (guard subcarrier) is at a channel edge, and is not used to transmit data. The guard subcarrier can reduce interference between adjacent frequency bands. A null subcarrier (non subcarrier) is within a channel and is not used to transmit data. A direct current subcarrier (direct current subcarrier, DC subcarrier) may be at a location corresponding to a direct current level on a channel, and is not used to transmit data.

In embodiments of this application, unless otherwise specified, a quantity of a noun indicates "a singular noun or a plural noun", namely, "one or more". "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. "At least one of the following items (pieces)" or a similar expression thereof means any combination of these items (pieces), including any combination of singular items (pieces) or plural items (pieces).

In addition, it should be understood that in descriptions of this application, terms such as "first" and "second" are merely used for distinguishing and description, but should not be understood as an indication or implication of relative importance, or should not be understood as an indication or implication of a sequence.

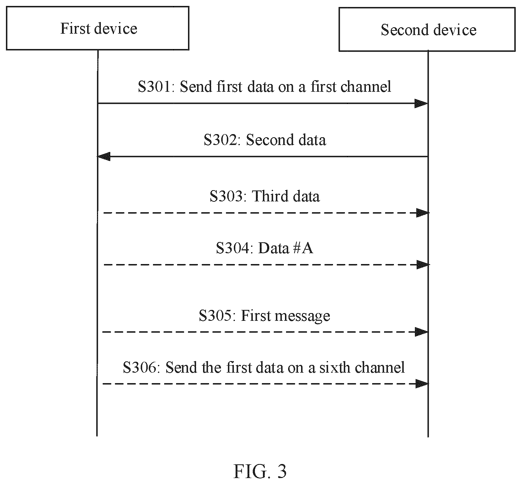

To improve a transmission capability of a Wi-Fi device, an embodiment of this application provides a communication method. The method may be applied to the system shown in FIG. 1. The following describes a procedure of this method in detail with reference to a flowchart shown in FIG. 3.

S301: A first device sends first data to a second device on a first channel; and correspondingly, the second device receives the first data from the first device on the first channel.

Both the first device and the second device are Wi-Fi devices. For example, the first device is an AP, and the second device is a STA. For another example, the first device is a STA, and the second device is an AP.

In an example, the first channel may fall within a 5 GHz frequency band. For example, the first channel may fall within one of the following frequency ranges: 5470 MHz to 5835 MHz, 5490 MHz to 5835 MHz, 5490 MHz to 5815 MHz, and 5470 MHz to 5850 MHz.

In another example, the first channel may alternatively fall within another frequency band. For example, the first channel falls within a 6 GHz frequency band or a 7 GHz frequency band.

In still another example, a frequency range of the first channel includes frequencies in at least two frequency bands. For example, the frequency range of the first channel includes both frequencies in the 5 GHz frequency band and frequencies in the 6 GHz frequency band. For example, the first channel falls within one of the following frequency ranges: 5925 MHz to 6905 MHz and 5945 MHz to 6905 MHz. For another example, the frequency range of the first channel includes both frequencies in the 5 GHz frequency band and frequencies in the 6 GHz frequency band and the 7 GHz frequency band. For example, the first channel falls within the following frequency range: 5945 MHz to 7125 MHz.

The frequency range that the first channel falls within may be a continuous frequency range, for example, 5490 MHz to 5835 MHz, or may be a discontinuous frequency range, for example, 5490 MHz to 5835 MHz and 5945 MHz to 6905 MHz. This is not limited in this application. The following uses an example in which the frequency range that the first channel falls within is 5490 MHz to 5835 MHz for description.

A bandwidth of the first channel is greater than or equal to 240 MHz. For example, the bandwidth of the first channel may be one of the following: 240 MHz, 320 MHz, and 325 MHz. For example, the first channel may be a channel shown in any row in Table 1.

**Table 1**

| Channel number | Frequency range of a channel | Bandwidth of a channel |
|---|---|---|
| 100 | 5490 MHz to 5730 MHz | 240 MHz |
| 100 | 5490 MHz to 5815 MHz | 325 MHz |
| 100 | 5490 MHz to 5810 MHz | 320 MHz |
| 101 | 5495 MHz to 5815 MHz | 320 MHz |

Optionally, if the frequency range of the first channel includes a frequency in a first frequency range, S301 may include: The first device sends the first data to the second device by using a resource, on the first channel, other than a resource corresponding to the first frequency range; and correspondingly, the second device receives the first data from the first device by using a resource, on the first channel, other than the resource corresponding to the first frequency range. In this case, the resource corresponding to the first frequency range may be a punctured resource, or the resource corresponding to the first frequency range may be a resource that cannot be used by a Wi-Fi device.

For example, the first frequency range is one of the following: 5710 MHz to 5730 MHz (that is, a 20 MHz channel whose channel number is 144), 5730 MHz to 5735 MHz (that is, a 5 MHz channel whose channel number is 148), and 5710 MHz to 5735 MHz (that is, the 20 MHz channel whose channel number is 144 and the 5 MHz channel whose channel number is 148).

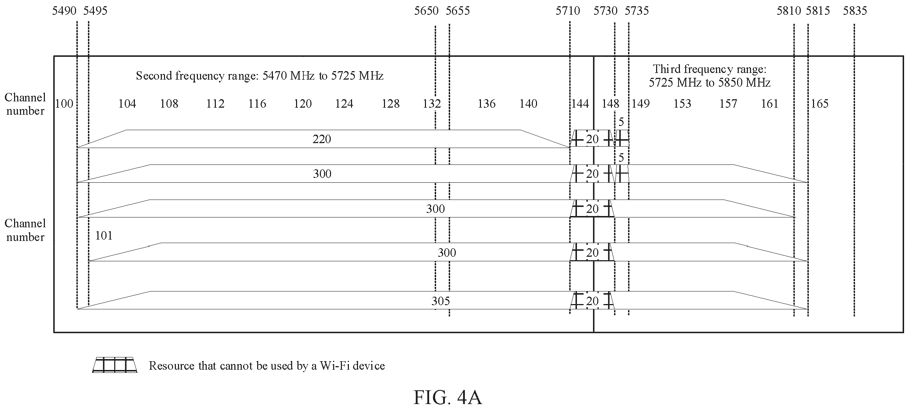

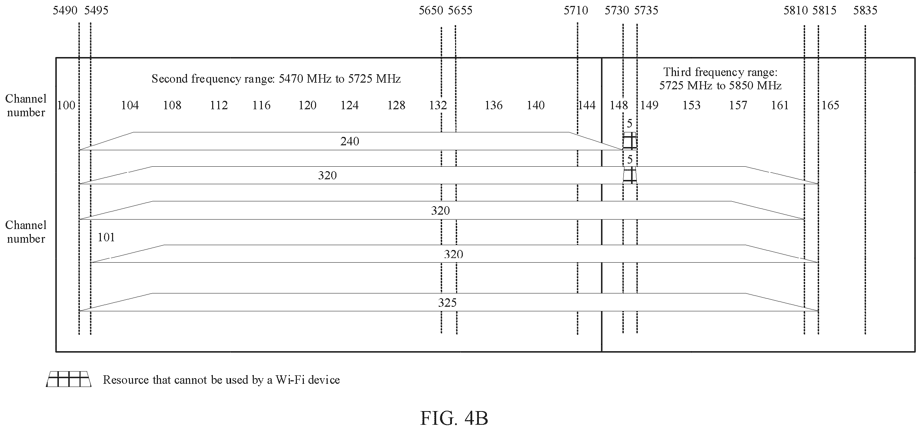

The following describes possible examples of the first channel with reference to FIG. 4A and FIG. 4B. In FIG. 4A and FIG. 4B, all numbers except channel numbers are in a unit of MHz. In the examples shown in FIG. 4A and FIG. 4B, a resource corresponding to 5470 MHz to 5490 MHz is a guard band.

In a first example, the Wi-Fi device cannot use the 20 MHz channel whose channel number is 144. As shown in FIG. 4A, the first channel may be a channel shown in any row in Table 2.

**Table 2**

| Channel number | Frequency range of a channel | Bandwidth of a channel | First frequency range |
|---|---|---|---|
| 100 | 5490 MHz to 5730 MHz | 240 MHz | 5710 MHz to 5735 MHz |
| 100 | 5490 MHz to 5815 MHz | 325 MHz | 5710 MHz to 5735 MHz |
| 100 | 5490 MHz to 5810 MHz | 320 MHz | 5710 MHz to 5730 MHz |
| 101 | 5495 MHz to 5815 MHz | 320 MHz | 5710 MHz to 5730 MHz |
| 100 | 5490 MHz to 5815 MHz | 325 MHz | 5710 MHz to 5730 MHz |

For example, when the first channel is a 240 MHz bandwidth channel whose channel number is 100, the first device may send the first data by using a resource, on the first channel, corresponding to 5490 MHz to 5710 MHz. For another example, when the first channel is a 320 MHz bandwidth channel whose channel number is 101, the first device may send the first data by using resources, on the first channel, corresponding to the following frequency ranges: 5495 MHz to 5710 MHz and 5730 MHz to 5815 MHz.

In a second example, the Wi-Fi device may use the 20 MHz channel whose channel number is 144. As shown in FIG. 4B, the first channel may be a channel shown in any row in Table 3.

**Table 3**

| Channel number | Frequency range of a channel | Bandwidth of a channel | First frequency range |
|---|---|---|---|
| 100 | 5490 MHz to 5730 MHz | 240 MHz | 5730 MHz to 5735 MHz |
| 100 | 5490 MHz to 5815 MHz | 325 MHz | 5730 MHz to 5735 MHz |
| 100 | 5490 MHz to 5810 MHz | 320 MHz | None |
| 101 | 5495 MHz to 5815 MHz | 320 MHz | None |
| 100 | 5490 MHz to 5815 MHz | 325 MHz | None |

For example, when the first channel is a 240 MHz bandwidth channel whose channel number is 100, the first device may send the first data by using a resource, on the first channel, corresponding to 5490 MHz to 5730 MHz. For another example, when the first channel is a 325 MHz bandwidth channel whose channel number is 100, the first device may send the first data by using resources, on the first channel, corresponding to the following frequency ranges: 5490 MHz to 5730 MHz and 5735 MHz to 5815 MHz.

According to this method, the first device does not send data on the resource corresponding to the first frequency range, so that interference to a device using the first frequency range can be avoided.

Optionally, a frequency range of a third channel is a fifth frequency range. A bandwidth of the third channel may include one of the following: 5 MHz, 10 MHz, 15 MHz, 20 MHz, 25 MHz, 30 MHz, and 35 MHz. The fifth frequency range includes, for example, 5730 MHz to 5735 MHz. The third channel may be used to transmit data of a first service, and the first channel may be used to transmit data of a second service. The first service and the second service may be the same or may be different. When the first service and the second service are different, a priority of the first service may be higher than a priority of the second service. For example, the third channel is used to transmit at least one of the following services: a quality of service (quality of service, QoS) service and a time-sensitive service.

S302: The second device sends second data to the first device; and correspondingly, the first device receives the second data from the second device.

The second data may be response data of the first data, or may be other data. This is not limited in this application.

According to this method, the first device may transmit data through a channel that is in the 5 GHz frequency band and that has a bandwidth greater than or equal to 240 MHz, so that a throughput can be improved, and a transmission capability of the first device can be improved.

Optionally, the method shown in FIG. 3 further includes:
S303: The first device sends third data to the second device on a fourth channel; and correspondingly, the second device receives the third data from the first device on the fourth channel.

The fourth channel and the first channel may fall within a same frequency range, or may fall within different frequency ranges. This is not limited in this application. The following uses an example in which a frequency range that the first channel falls within and a frequency range that the fourth channel falls within are both 5490 MHz to 5835 MHz for description.

A bandwidth of the fourth channel is less than 240 MHz. For example, the bandwidth of the fourth channel may be one of the following: 20 MHz, 40 MHz, 80 MHz, 160 MHz, and 165 MHz.

Optionally, if the frequency range of the fourth channel includes the first frequency range, S303 may include: The first device sends the third data to the second device by using a resource, on the fourth channel, other than a resource corresponding to the first frequency range; and correspondingly, the second device receives the third data from the first device by using a resource, on the fourth channel, other than the resource corresponding to the first frequency range. For specific content of the first frequency range, refer to S301. Details are not described herein again.

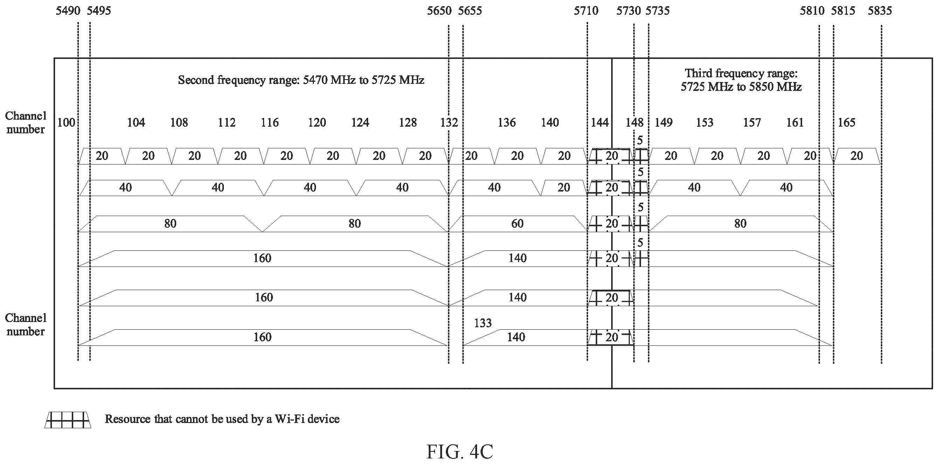

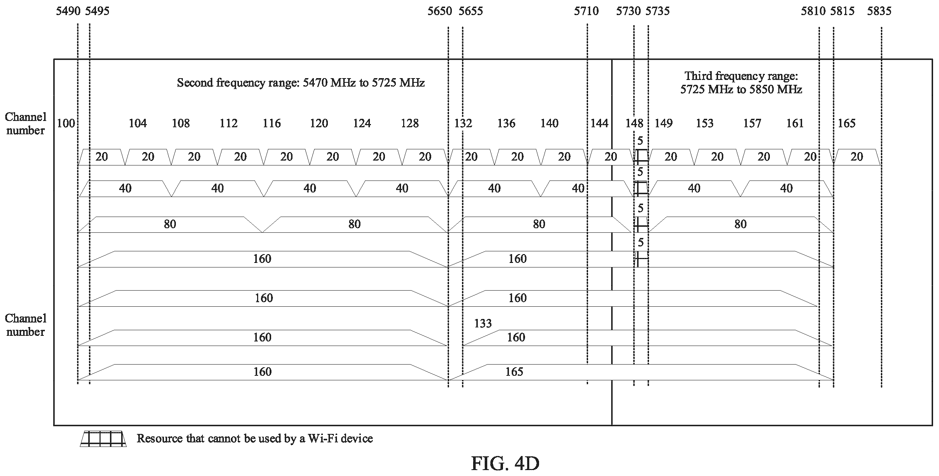

The following describes possible examples of the fourth channel with reference to FIG. 4C and FIG. 4D. In FIG. 4C and FIG. 4D, all numbers except channel numbers are in a unit of MHz. In the examples shown in FIG. 4C and FIG. 4D, a resource corresponding to 5470 MHz to 5490 MHz is a guard band.

In a first example, the Wi-Fi device cannot use the 20 MHz channel whose channel number is 144. As shown in FIG. 4C, the fourth channel may be a channel shown in any row in Table 4.

**Table 4**

| Channel number | Frequency range of a channel | Bandwidth of a channel | First frequency range |
|---|---|---|---|
| 100 | 5490 MHz to 5510 MHz | 20 MHz | 5710 MHz to 5735 MHz |
| 104 | 5510 MHz to 5530 MHz | 20 MHz | |
| 108 | 5530 MHz to 5550 MHz | 20 MHz | |
| 112 | 5550 MHz to 5570 MHz | 20 MHz | |
| 116 | 5570 MHz to 5590 MHz | 20 MHz | |
| 120 | 5590 MHz to 5610 MHz | 20 MHz | |
| 124 | 5610 MHz to 5630 MHz | 20 MHz | |
| 128 | 5630 MHz to 5650 MHz | 20 MHz | |
| 132 | 5650 MHz to 5670 MHz | 20 MHz | |
| 136 | 5670 MHz to 5690 MHz | 20 MHz | |
| 140 | 5690 MHz to 5710 MHz | 20 MHz | |
| 144 | 5710 MHz to 5730 MHz | 20 MHz | |
| 149 | 5735 MHz to 5755 MHz | 20 MHz | |
| 153 | 5755 MHz to 5775 MHz | 20 MHz | |
| 157 | 5775 MHz to 5795 MHz | 20 MHz | |
| 161 | 5795 MHz to 5815 MHz | 20 MHz | |
| 165 | 5815 MHz to 5835 MHz | 20 MHz | |
| 100 | 5490 MHz to 5530 MHz | 40 MHz | 5710 MHz to 5735 MHz |
| 108 | 5530 MHz to 5570 MHz | 40 MHz | |
| 116 | 5570 MHz to 5610 MHz | 40 MHz | |
| 124 | 5610 MHz to 5650 MHz | 40 MHz | |
| 132 | 5650 MHz to 5690 MHz | 40 MHz | |
| 140 | 5690 MHz to 5730 MHz | 40 MHz | |
| 149 | 5735 MHz to 5775 MHz | 40 MHz | |
| 157 | 5775 MHz to 5815 MHz | 40 MHz | |
| 100 | 5490 MHz to 5570 MHz | 80 MHz | 5710 MHz to 5735 MHz |
| 116 | 5570 MHz to 5650 MHz | 80 MHz | |
| 132 | 5650 MHz to 5730 MHz | 80 MHz | |
| 149 | 5735 MHz to 5815 MHz | 80 MHz | |
| 100 | 5490 MHz to 5650 MHz | 160 MHz | 5710 MHz to 5735 MHz |
| 132 | 5650 MHz to 5815 MHz | 165 MHz | |
| 100 | 5490 MHz to 5650 MHz | 160 MHz | 5710 MHz to 5730 MHz |
| 132 | 5650 MHz to 5810 MHz | 160 MHz | |
| 100 | 5490 MHz to 5650 MHz | 160 MHz | 5710 MHz to 5730 MHz |
| 133 | 5655 MHz to 5815 MHz | 160 MHz | |

For example, when the fourth channel is a 20 MHz bandwidth channel whose channel number is 100, the first device may send the third data by using a resource, on the fourth channel, corresponding to 5490 MHz to 5510 MHz. For another example, when the fourth channel is a 165 MHz bandwidth channel whose channel number is 132, the first device may send the third data by using resources, on the fourth channel, corresponding to the following frequency ranges: 5650 MHz to 5710 MHz and 5735 MHz to 5815 MHz. For still another example, when the fourth channel is a 160 MHz bandwidth channel whose channel number is 132, the first device may send the third data by using resources, on the fourth channel, corresponding to the following frequency ranges: 5650 MHz to 5710 MHz and 5730 MHz to 5810 MHz.

In a second example, the Wi-Fi device may use the 20 MHz channel whose channel number is 144. As shown in FIG. 4D, the fourth channel may be a channel shown in any row in Table 5.

**Table 5**

| Channel number | Frequency range of a channel | Bandwidth of a channel | First frequency range |
|---|---|---|---|
| 100 | 5490 MHz to 5510 MHz | 20 MHz | 5730 MHz to 5735 MHz |
| 104 | 5510 MHz to 5530 MHz | 20 MHz | |
| 108 | 5530 MHz to 5550 MHz | 20 MHz | |
| 112 | 5550 MHz to 5570 MHz | 20 MHz | |
| 116 | 5570 MHz to 5590 MHz | 20 MHz | |
| 120 | 5590 MHz to 5610 MHz | 20 MHz | |
| 124 | 5610 MHz to 5630 MHz | 20 MHz | |
| 128 | 5630 MHz to 5650 MHz | 20 MHz | |
| 132 | 5650 MHz to 5670 MHz | 20 MHz | |
| 136 | 5670 MHz to 5690 MHz | 20 MHz | |
| 140 | 5690 MHz to 5710 MHz | 20 MHz | |
| 144 | 5710 MHz to 5730 MHz | 20 MHz | |
| 149 | 5735 MHz to 5755 MHz | 20 MHz | |
| 153 | 5755 MHz to 5775 MHz | 20 MHz | |
| 157 | 5775 MHz to 5795 MHz | 20 MHz | |
| 161 | 5795 MHz to 5815 MHz | 20 MHz | |
| 165 | 5815 MHz to 5835 MHz | 20 MHz | |
| 100 | 5490 MHz to 5530 MHz | 40 MHz | 5730 MHz to 5735 MHz |
| 108 | 5530 MHz to 5570 MHz | 40 MHz | |
| 116 | 5570 MHz to 5610 MHz | 40 MHz | |
| 124 | 5610 MHz to 5650 MHz | 40 MHz | |
| 132 | 5650 MHz to 5690 MHz | 40 MHz | |
| 140 | 5690 MHz to 5730 MHz | 40 MHz | |
| 149 | 5735 MHz to 5775 MHz | 40 MHz | |
| 157 | 5775 MHz to 5815 MHz | 40 MHz | |
| 100 | 5490 MHz to 5570 MHz | 80 MHz | 5730 MHz to 5735 MHz |
| 116 | 5570 MHz to 5650 MHz | 80 MHz | |
| 132 | 5650 MHz to 5730 MHz | 80 MHz | |
| 149 | 5735 MHz to 5815 MHz | 80 MHz | |
| 100 | 5490 MHz to 5650 MHz | 160 MHz | 5730 MHz to 5735 MHz |
| 132 | 5650 MHz to 5815 MHz | 165 MHz | |
| 100 | 5490 MHz to 5650 MHz | 160 MHz | None |
| 132 | 5650 MHz to 5810 MHz | 160 MHz | |
| 100 | 5490 MHz to 5650 MHz | 160 MHz | None |
| 133 | 5655 MHz to 5815 MHz | 160 MHz | |
| 100 | 5490 MHz to 5650 MHz | 160 MHz | None |
| 132 | 5650 MHz to 5815 MHz | 165 MHz | |

For example, when the fourth channel is a 20 MHz bandwidth channel whose channel number is 100, the first device may send the third data by using a resource, on the fourth channel, corresponding to 5490 MHz to 5510 MHz. For another example, when the fourth channel is a 165 MHz bandwidth channel whose channel number is 132, the first device may send the third data by using resources, on the fourth channel, corresponding to the following frequency ranges: 5650 MHz to 5730 MHz and 5735 MHz to 5815 MHz. For still another example, when the fourth channel is a 160 MHz bandwidth channel whose channel number is 132, the first device may send the third data by using a resource, on the fourth channel, corresponding to 5650 MHz to 5810 MHz.

In this application, the third data may be the same as the first data, or may be different from the first data.

Optionally, the method shown in FIG. 3 further includes:
S304: The first device sends data #A to the second device on a fifth channel; and correspondingly, the second device receives the data #A from the first device on the fifth channel.

The fifth channel and the first channel may fall within a same frequency range, or may fall within different frequency ranges. This is not limited in this application. The following uses an example in which a frequency range that the fifth channel falls within is 5490 MHz to 5835 MHz for description.

Optionally, the frequency range of the fifth channel includes the first frequency range, and a bandwidth of the fifth channel is one of the following: 20 MHz, 40 MHz, 80 MHz, 160 MHz, 240 MHz and 320 MHz. The first frequency range is one of the following: 5710 MHz to 5730 MHz, 5730 MHz to 5735 MHz, and 5710 MHz to 5735 MHz. In S304, the resource corresponding to the first frequency range is a resource that may be used by the Wi-Fi device.

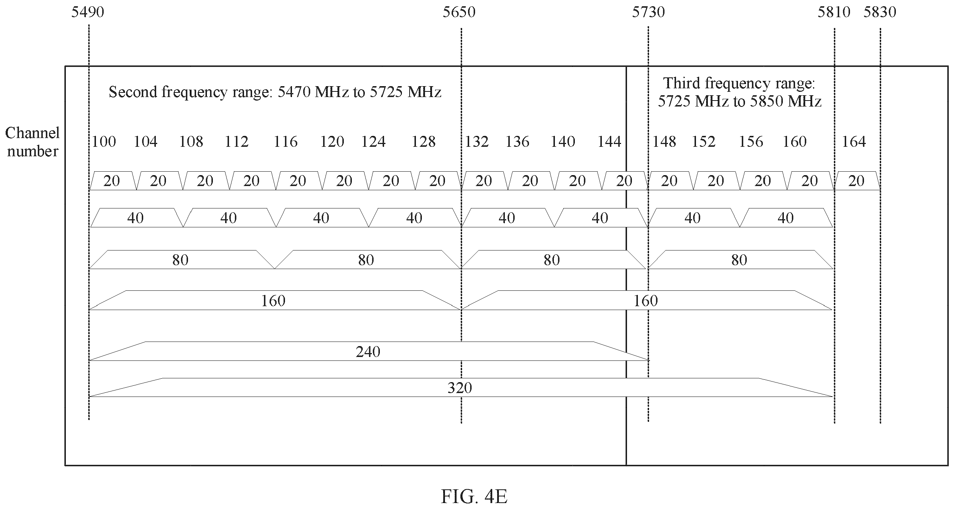

For example, the Wi-Fi device may use the 20 MHz channel whose channel number is 144, and channels with a same bandwidth are consecutive in the frequency range that the fifth channel falls within. As shown in FIG. 4E, the fifth channel may be a channel shown in any row in Table 6. In FIG. 4E, all numbers except channel numbers are in a unit of MHz. In an example shown in FIG. 4E, a resource corresponding to 5470 MHz to 5490 MHz is a guard band.

**Table 6**

| Channel number | Frequency range of a channel | Bandwidth of a channel |
|---|---|---|
| 100 | 5490 MHz to 5510 MHz | 20 MHz |
| 104 | 5510 MHz to 5530 MHz | 20 MHz |
| 108 | 5530 MHz to 5550 MHz | 20 MHz |
| 112 | 5550 MHz to 5570 MHz | 20 MHz |
| 116 | 5570 MHz to 5590 MHz | 20 MHz |
| 120 | 5590 MHz to 5610 MHz | 20 MHz |
| 124 | 5610 MHz to 5630 MHz | 20 MHz |
| 128 | 5630 MHz to 5650 MHz | 20 MHz |
| 132 | 5650 MHz to 5670 MHz | 20 MHz |
| 136 | 5670 MHz to 5690 MHz | 20 MHz |
| 140 | 5690 MHz to 5710 MHz | 20 MHz |
| 144 | 5710 MHz to 5730 MHz | 20 MHz |
| 148 | 5730 MHz to 5750 MHz | 20 MHz |
| 152 | 5750 MHz to 5770 MHz | 20 MHz |
| 156 | 5770 MHz to 5790 MHz | 20 MHz |
| 160 | 5790 MHz to 5810 MHz | 20 MHz |
| 164 | 5810 MHz to 5830 MHz | 20 MHz |
| 100 | 5490 MHz to 5530 MHz | 40 MHz |
| 108 | 5530 MHz to 5570 MHz | 40 MHz |
| 116 | 5570 MHz to 5610 MHz | 40 MHz |
| 124 | 5610 MHz to 5650 MHz | 40 MHz |
| 132 | 5650 MHz to 5690 MHz | 40 MHz |
| 140 | 5690 MHz to 5730 MHz | 40 MHz |
| 148 | 5730 MHz to 5770 MHz | 40 MHz |
| 156 | 5770 MHz to 5810 MHz | 40 MHz |
| 100 | 5490 MHz to 5570 MHz | 80 MHz |
| 116 | 5570 MHz to 5650 MHz | 80 MHz |
| 132 | 5650 MHz to 5730 MHz | 80 MHz |
| 148 | 5730 MHz to 5810 MHz | 80 MHz |
| 100 | 5490 MHz to 5650 MHz | 160 MHz |
| 132 | 5650 MHz to 5810 MHz | 160 MHz |
| 100 | 5490 MHz to 5810 MHz | 320 MHz |

For example, when the fifth channel is a 20 MHz bandwidth channel whose channel number is 148, the first device may send the data #A by using a resource, on the fifth channel, corresponding to 5730 MHz to 5750 MHz. For another example, when the fifth channel is a 160 MHz bandwidth channel whose channel number is 132, the first device may send the data #A by using a resource, on the fifth channel, corresponding to 5650 MHz to 5810 MHz.

In this application, the data #A may be the same as or different from the first data.

In S301, S303, and S304, the first device may send data to the second device on a channel. The following uses an example in which the first device sends data to the second device on a second channel to describe a transmit power for sending the data by the first device. The second channel may be one of the following: the first channel, the fourth channel, and the fifth channel.

Optionally, a frequency range that the second channel falls within is within a union set of a second frequency range and a third frequency range. The frequency range that the second channel falls within has an intersection with both the second frequency range and the third frequency range. An unlicensed national information infrastructure (Unlicensed National Information Infrastructure, U-NII) frequency band corresponding to the second frequency range is different from a U-NII frequency band corresponding to the third frequency range. A maximum transmit power allowed for the second frequency range is different from a maximum transmit power allowed for the third frequency range. For example (the following is referred to as Example 1), the frequency range that the second channel falls within is 5470 MHz to 5835 MHz. The second frequency range is 5470 MHz to 5720 MHz, the U-NII frequency band corresponding to the second frequency range is U-NII worldwide (worldwide), U-NII-2C, or U-NII-2e, and the maximum transmit power allowed is 250 milliwatts (mW). The third frequency range is 5720 MHz to 5850 MHz, the U-NII frequency band corresponding to the third frequency range is U-NII upper (Upper) or U-NII-3, and the maximum transmit power allowed is 1 watt (W).

In some possible manners, when the second channel falls within the second frequency range and/or the third frequency range, the first device may send the data to the second device on the second channel at a first transmit power. The first transmit power is less than or equal to the maximum transmit powers allowed for the second frequency range and the third frequency range. In other words, for channels in different U-NII frequency bands, the first device may send the data at the same first transmit power, and the transmit power is less than or equal to the maximum transmit powers allowed for the second frequency range and the third frequency range. For example, in Example 1, when the second channel is any channel in Table 2 or Table 3, the first device may send the data at the first transmit power, where the first transmit power is less than or equal to 250 mW.

In some other possible manners, when the frequency range of the second channel falls within the second frequency range, the first device may send the data to the second device through the second channel at a second transmit power, where the second transmit power may be less than or equal to the maximum transmit power allowed for the second frequency range. When the frequency range of the second channel falls within the third frequency range, the first device may send the data to the second device through the second channel at a third transmit power, where the third transmit power may be less than or equal to the maximum transmit power allowed for the third frequency range. The second transmit power and the third transmit power may be different. For example, the third transmit power is greater than the second transmit power. In other words, for channels in different U-NII frequency bands, the first device may send the data at different transmit powers. In this case, if the second channel includes a fourth frequency range, the first device may send the data to the second device by using a resource, on the second channel, other than a resource corresponding to the fourth frequency range. The fourth frequency range may be one of the following: 5710 MHz to 5730 MHz (that is, the 20 MHz channel whose channel number is 144), and 5735 MHz to 5755 MHz (that is, a 20 MHz channel whose channel number is 149). For example, in Example 1, when the second channel is the 320 MHz bandwidth channel whose channel number is 101 in Table 2, the first device may send the data by using resources, on the second channel, corresponding to the following frequency ranges: 5495 MHz to 5710 MHz and 5730 MHz to 5815 MHz. In this manner, leakage of a signal transmitted at the third transmit power to an area of a signal transmitted at the second transmit power can be avoided, so that the area of the signal transmitted at the second transmit power cannot meet a spectrum requirement.

In some possible manners, when sending the data to the second device on the second channel, the first device may send the data to the second device based on an RU allocation scheme of the second channel. Specifically, the first device may map the data to an RU of the second channel, and send mapped data to the second device.

Optionally, when a bandwidth of the second channel is 165 MHz, 240 MHz, or 325 MHz, the second channel may include at least one of the following:
1. at least one first RU, where each first RU may include 26 consecutive subcarriers;
2. at least one second RU, where each second RU may include 52 consecutive subcarriers;
3. at least one third RU, where each third RU may include 106 consecutive subcarriers;
4. at least one fourth RU, where each fourth RU may include 242 consecutive subcarriers;
5. at least one fifth RU, where each fifth RU may include 484 subcarriers, the 484 subcarriers may be consecutive or may be inconsecutive, and, for example, the 484 subcarriers include two consecutive 242 subcarriers;
6. at least one sixth RU, where each sixth RU may include 996 subcarriers, the 996 subcarriers may be consecutive or may be inconsecutive, and, for example, the 996 subcarriers include two consecutive 498 subcarriers;
7. at least one seventh RU, where each seventh RU may include 2×996 subcarriers;
8. at least one eighth RU, where each eighth RU may include 3×996 subcarriers; and
9. at least one ninth RU, where each ninth RU includes 4×996 subcarriers.

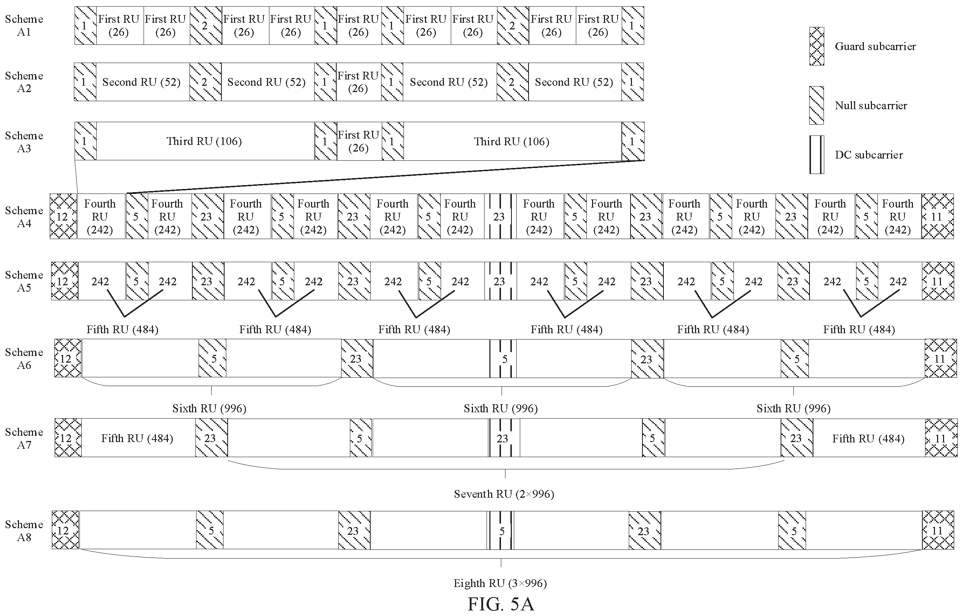

The following describes the RU allocation scheme of the second channel with reference to FIG. 5A to FIG. 5D. In FIG. 5A to FIG. 5D, a number in a block represents a quantity of subcarriers.

In an example, the bandwidth of the second channel is 240 MHz. For example, the second channel is the 240 MHz channel shown in Table 3. The RU allocation scheme of the second channel may be any scheme shown in FIG. 5A. The following describes schemes shown in FIG. 5A.

A scheme A1 is a 26-tone (tone) scheme. In other words, one RU may include a maximum of 26 subcarriers. In the scheme A1, the second channel may include a plurality of guard subcarriers, a plurality of DC subcarriers, a plurality of null subcarriers, and a plurality of first RUs.

A scheme A2 is a 52-tone scheme. In other words, one RU may include a maximum of 52 subcarriers. In the scheme A2, the second channel may include a plurality of guard subcarriers, a plurality of DC subcarriers, a plurality of null subcarriers, a plurality of first RUs, and a plurality of second RUs.

A scheme A3 is a 106-tone scheme. In other words, one RU may include a maximum of 106 subcarriers. In the scheme A3, the second channel includes a plurality of guard subcarriers, a plurality of DC subcarriers, a plurality of null subcarriers, a plurality of first RUs, and a plurality of third RUs.

A scheme A4 is a 242-tone scheme. In other words, one RU may include a maximum of 242 subcarriers. In the scheme A4, the second channel includes a plurality of guard subcarriers, a plurality of DC subcarriers, a plurality of null subcarriers, and a plurality of fourth RUs.

A scheme A5 is a 484-tone scheme. In other words, one RU may include a maximum of 484 subcarriers. In the scheme A5, the second channel includes a plurality of guard subcarriers, a plurality of DC subcarriers, a plurality of null subcarriers, and a plurality of fifth RUs.

A scheme A6 is a 996-tone scheme. In other words, one RU may include a maximum of 996 subcarriers. In the scheme A6, the second channel includes a plurality of guard subcarriers, a plurality of DC subcarriers, a plurality of null subcarriers, and a plurality of sixth RUs.

A scheme A7 is a 2×996-tone scheme. In other words, one RU may include a maximum of 2×996 subcarriers. In the scheme A7, the second channel includes a plurality of guard subcarriers, a plurality of DC subcarriers, a plurality of null subcarriers, a plurality of fifth RUs, and one seventh RU.

A scheme A8 is a 3×996-tone scheme. In other words, one RU may include a maximum of 3×996 subcarriers. In the scheme A8, the second channel includes a plurality of guard subcarriers, a plurality of DC subcarriers, a plurality of null subcarriers, and one eighth RU.

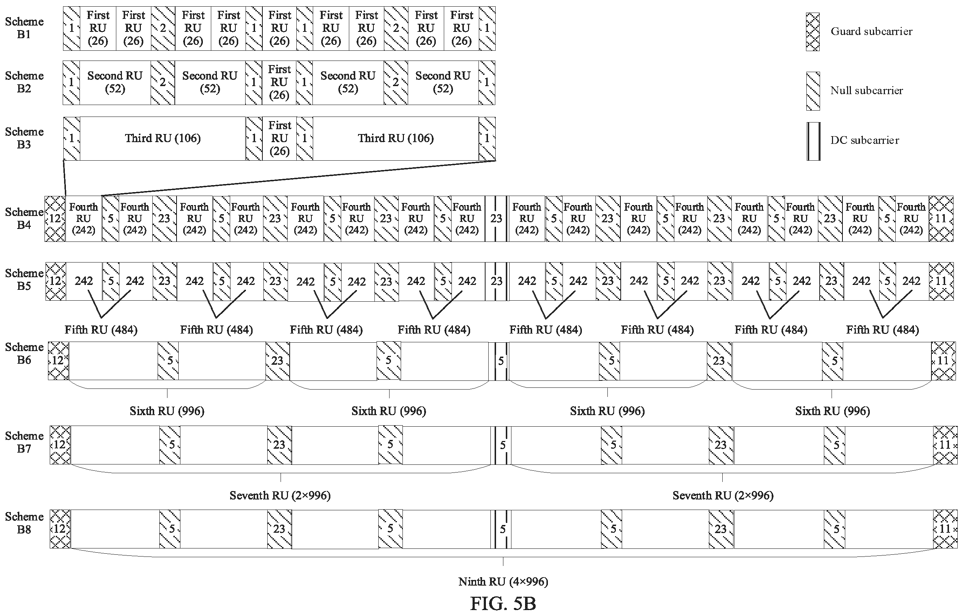

In another example, the bandwidth of the second channel is 320 MHz. For example, the second channel is a 320 MHz channel whose channel number is 100 or 101 shown in Table 2, and the Wi-Fi device may use the 5 MHz channel whose channel number is 148. The RU allocation scheme of the second channel may be any scheme shown in FIG. 5B. The following describes schemes shown in FIG. 5B.

A scheme B1 is a 26-tone scheme. In other words, one RU may include a maximum of 26 subcarriers. In the scheme B1, the second channel includes a plurality of guard subcarriers, a plurality of DC subcarriers, a plurality of null subcarriers, and a plurality of first RUs.

A scheme B2 is a 52-tone scheme. In other words, one RU may include a maximum of 52 subcarriers. In the scheme B2, the second channel includes a plurality of guard subcarriers, a plurality of DC subcarriers, a plurality of null subcarriers, a plurality of first RUs, and a plurality of second RUs.

A scheme B3 is a 106-tone scheme. In other words, one RU may include a maximum of 106 subcarriers. In the scheme B3, the second channel includes a plurality of guard subcarriers, a plurality of DC subcarriers, a plurality of null subcarriers, a plurality of first RUs, and a plurality of third RUs.

A scheme B4 is a 242-tone scheme. In other words, one RU may include a maximum of 242 subcarriers. In the scheme B4, the second channel includes a plurality of guard subcarriers, a plurality of DC subcarriers, a plurality of null subcarriers, and a plurality of fourth RUs.

A scheme B5 is a 484-tone scheme. In other words, one RU may include a maximum of 484 subcarriers. In the scheme B5, the second channel includes a plurality of guard subcarriers, a plurality of DC subcarriers, a plurality of null subcarriers, and a plurality of fifth RUs.

A scheme B6 is a 996-tone scheme. In other words, one RU may include a maximum of 996 subcarriers. In the scheme B6, the second channel includes a plurality of guard subcarriers, a plurality of DC subcarriers, a plurality of null subcarriers, and a plurality of sixth RUs.

A scheme B7 is a 2×996-tone scheme. In other words, one RU may include a maximum of 2×996 subcarriers. In the scheme B7, the second channel includes a plurality of guard subcarriers, a plurality of DC subcarriers, a plurality of null subcarriers, and a plurality of seventh RUs.

A scheme B8 is a 4×996-tone scheme. In other words, one RU may include a maximum of 4×996 subcarriers. In the scheme B8, the second channel includes a plurality of guard subcarriers, a plurality of DC subcarriers, a plurality of null subcarriers, and one ninth RU.

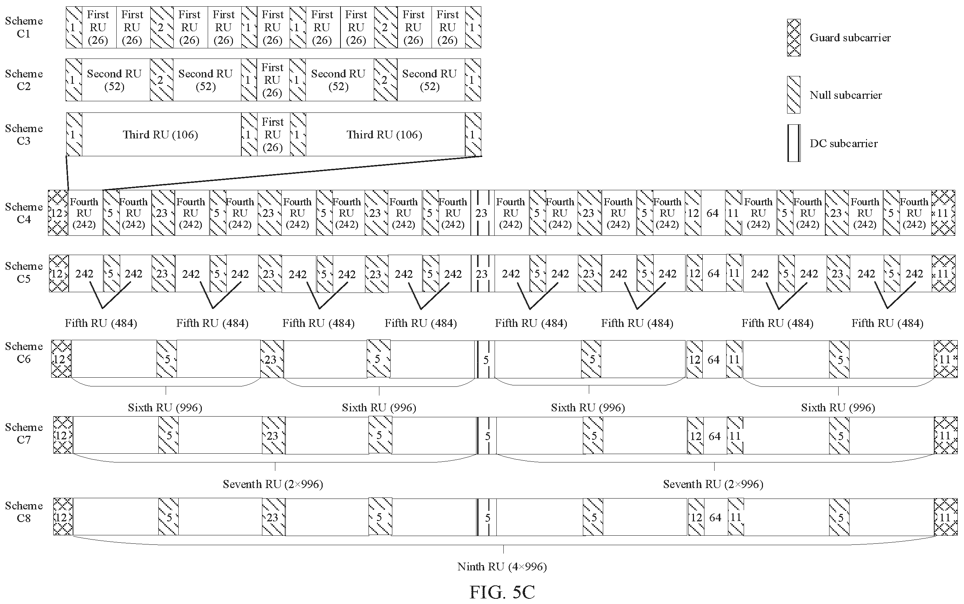

In still another example, the bandwidth of the second channel is 325 MHz. For example, the second channel is a 325 MHz channel whose channel number is 100 and that includes the first frequency range shown in Table 3, and the Wi-Fi device cannot use the 5 MHz channel whose channel number is 148. The RU allocation scheme of the second channel may be any scheme shown in FIG. 5C. The following describes schemes shown in FIG. 5C.

A scheme C1 is a 26-tone scheme. In other words, one RU may include a maximum of 26 subcarriers. In the scheme C1, the second channel includes a plurality of guard subcarriers, a plurality of DC subcarriers, a plurality of null subcarriers, a plurality of first RUs, and a resource #1. The resource #1 includes a resource corresponding to the 5 MHz channel whose channel number is 148, and may include 64 subcarriers.

A scheme C2 is a 52-tone scheme. In other words, one RU may include a maximum of 52 subcarriers. In the scheme C2, the second channel includes a plurality of guard subcarriers, a plurality of DC subcarriers, a plurality of null subcarriers, a plurality of first RUs, a plurality of second RUs, and a resource #1.

A scheme C3 is a 106-tone scheme. In other words, one RU may include a maximum of 106 subcarriers. In the scheme C3, the second channel includes a plurality of guard subcarriers, a plurality of DC subcarriers, a plurality of null subcarriers, a plurality of first RUs, a plurality of third RUs, and a resource #1.

A scheme C4 is a 242-tone scheme. In other words, one RU may include a maximum of 242 subcarriers. In the scheme C4, the second channel includes a plurality of guard subcarriers, a plurality of DC subcarriers, a plurality of null subcarriers, a plurality of fourth RUs, and a resource #1.

A scheme C5 is a 484-tone scheme. In other words, one RU may include a maximum of 484 subcarriers. In the scheme C5, the second channel includes a plurality of guard subcarriers, a plurality of DC subcarriers, a plurality of null subcarriers, a plurality of fifth RUs, and a resource #1.

A scheme C6 is a 996-tone scheme. In other words, one RU may include a maximum of 996 subcarriers. In the scheme C6, the second channel includes a plurality of guard subcarriers, a plurality of DC subcarriers, a plurality of null subcarriers, a plurality of sixth RUs, and a resource #1.

A scheme C7 is a 2×996-tone scheme. In other words, one RU may include a maximum of 2×996 subcarriers. In the scheme C7, the second channel includes a plurality of guard subcarriers, a plurality of DC subcarriers, a plurality of null subcarriers, a plurality of seventh RUs, and a resource #1.

A scheme C8 is a 4×996-tone scheme. In other words, one RU may include a maximum of 4×996 subcarriers. In the scheme C8, the second channel includes a plurality of guard subcarriers, a plurality of DC subcarriers, a plurality of null subcarriers, one ninth RU, and a resource #1.

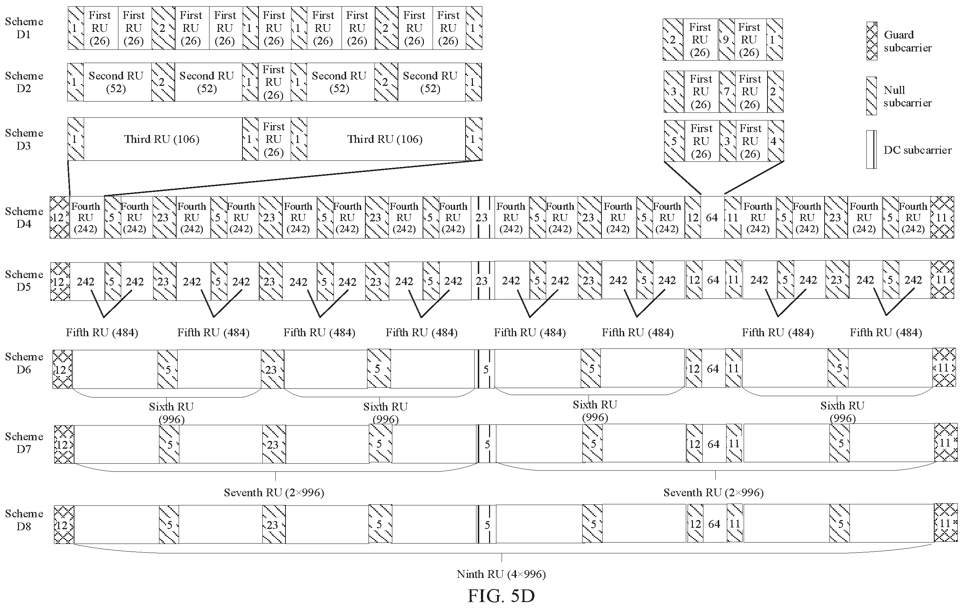

In yet another example, the bandwidth of the second channel is 325 MHz. For example, the second channel is a 325 MHz channel whose channel number is 100 and that does not include the first frequency range shown in Table 3, and the Wi-Fi device may use the 5 MHz channel whose channel number is 148. The RU allocation scheme of the second channel may be any scheme shown in FIG. 5C. The following describes schemes shown in FIG. 5D.

A scheme D1 is a 26-tone scheme. In other words, one RU may include a maximum of 26 subcarriers. In the scheme D1, the second channel includes a plurality of guard subcarriers, a plurality of DC subcarriers, a plurality of null subcarriers, a plurality of first RUs, and a resource #2. The resource #2 includes a resource corresponding to the 5 MHz channel whose channel number is 148, and may include 64 subcarriers. Optionally, the resource #2 may include a plurality of null subcarriers and two first RUs. In a manner, the resource #2 may sequentially include two null subcarriers, one first RU, nine null subcarriers, one first RU, and one null subcarrier. In another manner, the resource #2 may sequentially include three null subcarriers, one first RU, seven null subcarriers, one first RU, and two null subcarriers. In still another manner, the resource #2 may sequentially include five null subcarriers, one first RU, three null subcarriers, one first RU, and four null subcarriers. In the three manners of the resource #2, the resource #2 and another resource on the second channel may be used by a same apparatus. In this case, the resource #2 and the another resource on the second channel may be used to transmit a same service, or may be used to transmit different services. Optionally, in the three manners of the resource #2, the null subcarriers between the two first RUs in the resource #2 may be replaced with DC subcarriers. In this case, the resource #2 and the another resource on the second channel may be used by different apparatuses. For example, an apparatus #A transmits a service by using the resource #2, and an apparatus #B transmits a service by using a resource, on the second channel, other than the resource #2.

A scheme D2 is a 52-tone scheme. In other words, one RU may include a maximum of 52 subcarriers. In the scheme D2, the second channel includes a plurality of guard subcarriers, a plurality of DC subcarriers, a plurality of null subcarriers, a plurality of first RUs, a plurality of second RUs, and a resource #2.

A scheme D3 is a 106-tone scheme. In other words, one RU may include a maximum of 106 subcarriers. In the scheme D3, the second channel includes a plurality of guard subcarriers, a plurality of DC subcarriers, a plurality of null subcarriers, a plurality of first RUs, a plurality of third RUs, and a resource #2.

A scheme D4 is a 242-tone scheme. In other words, one RU may include a maximum of 242 subcarriers. In the scheme D4, the second channel includes a plurality of guard subcarriers, a plurality of DC subcarriers, a plurality of null subcarriers, a plurality of fourth RUs, and a resource #2.

A scheme D5 is a 484-tone scheme. In other words, one RU may include a maximum of 484 subcarriers. In the scheme D5, the second channel includes a plurality of guard subcarriers, a plurality of DC subcarriers, a plurality of null subcarriers, a plurality of fifth RUs, and a resource #2.

A scheme D6 is a 996-tone scheme. In other words, one RU may include a maximum of 996 subcarriers. In the scheme D6, the second channel includes a plurality of guard subcarriers, a plurality of DC subcarriers, a plurality of null subcarriers, a plurality of sixth RUs, and a resource #2.

A scheme D7 is a 2×996-tone scheme. In other words, one RU may include a maximum of 2×996 subcarriers. In the scheme D7, the second channel includes a plurality of guard subcarriers, a plurality of DC subcarriers, a plurality of null subcarriers, a plurality of seventh RUs, and a resource #2.

A scheme D8 is a 4×996-tone scheme. In other words, one RU may include a maximum of 4×996 subcarriers. In the scheme D8, the second channel includes a plurality of guard subcarriers, a plurality of DC subcarriers, a plurality of null subcarriers, one ninth RU, and a resource #2.

Optionally, in the example shown in FIG. 5D, the third channel may be the 5 MHz channel whose channel number is 148, and is used to transmit the second service. For specific content of the second service, refer to S301. Details are not described herein again. Alternatively, 5730 MHz to 5735 MHz may be used as an extended bandwidth of a 320 MHz bandwidth channel, to obtain a 325 MHz bandwidth channel, and the 325 MHz channel may be used to transmit the same service.

Optionally, when the first device sends the data to the second device on the second channel, the first device may further send, to the second device, a message indicating the second channel. For example, the method shown in FIG. 3 further includes:
S305: The first device sends a first message; and correspondingly, the second device receives the first message.

The first message includes first information indicating the bandwidth of the second channel. For example, the first message may be an EHT PPDU, and the first information may be a bandwidth subfield in a U-SIG field in the EHT PPDU.

Optionally, a relationship between the first information and the bandwidth of the second channel includes at least one of the following:
1. When a value of the first information is a first value, the bandwidth of the second channel is 160 MHz or 165 MHz. The first value is, for example, 3, and the second channel is, for example, a 160 MHz channel or a 165 MHz channel shown in Table 4, Table 5, or Table 6.
2. When a value of the first information is a second value, the bandwidth of the second channel is 240 MHz. The second value is, for example, 6, and the second channel is, for example, a 240 MHz channel shown in Table 2, Table 3, or Table 6.
3. When a value of the first information is a third value, the bandwidth of the second channel is 320 MHz or 325 MHz. The third value is, for example, 7, and the second channel is, for example, a 320 MHz channel or a 325 MHz channel shown in Table 2, Table 3, or Table 6.

According to this method, the first device may indicate, to the second device, a width of the channel used to send the data, so that the second device receives the data based on the width. In this way, an energy loss caused by blind detection performed by the second device can be reduced, and complexity of receiving the data by the second device is reduced.

In some possible manners, the first message may include information indicating the RU allocation scheme of the second channel. For example, the first message further includes at least one first subfield and at least one second subfield, and the at least one first subfield and the at least one second subfield jointly indicate the RU allocation scheme of the second channel. Each first subfield and each second subfield may indicate a subcarrier range corresponding to one RU. The first subfield is, for example, an RU Allocation-1 field in an EHT-SIG field in the EHT PPDU, and the second subfield is, for example, an RU Allocation-2 field in the EHT-SIG field in the EHT PPDU.

Optionally, a relationship between the first information, the at least one first subfield, and the at least one second subfield includes at least one of the following:
1. When the value of the first information is the first value, a quantity of first subfields in the at least one first subfield is 2, and a quantity of second subfields in the at least one second subfield is 2 or 3. The first value is, for example, 3.

For example, when the bandwidth of the second channel is 165 MHz, the value of the first information is 3, the quantity of first subfields in the at least one first subfield is 2, and the quantity of second subfields in the at least one second subfield is 3.

For another example, when the bandwidth of the second channel is 160 MHz, the value of the first information is 3, the quantity of first subfields in the at least one first subfield is 2, and the quantity of second subfields in the at least one second subfield is 2.

2. When the value of the first information is the second value, a quantity of first subfields in the at least one first subfield is 2, and a quantity of second subfields in the at least one second subfield is 4. The second value is, for example, 6.

For example, when the bandwidth of the second channel is 240 MHz, the value of the first information is 6, the quantity of first subfields in the at least one first subfield is 2, and the quantity of second subfields in the at least one second subfield is 4.

3. When the value of the first information is the third value, a quantity of first subfields in the at least one first subfield is 2, and a quantity of second subfields in the at least one second subfield is 7. The third value is, for example, 7.

For example, when the bandwidth of the second channel is 320 MHz or 325 MHz, the value of the first information is 7, the quantity of first subfields in the at least one first subfield is 2, and the quantity of second subfields in the at least one second subfield is 3.

According to this method, the first device may indicate, to the second device, an RU allocation scheme of the channel used to send the data, so that the second device receives the data based on the RU allocation scheme. In this way, the energy loss caused by blind detection performed by the second device can be reduced, and complexity of receiving the data by the second device is reduced.

Optionally, when the quantity of second subfields in the at least one second subfield is 3 or 7, one or more second subfields in the at least one second subfield correspond to the third channel. The frequency range of the third channel falls within the frequency range of the second channel. For the bandwidth and the frequency range of the third channel, refer to S301. Details are not described herein again. The following uses an example in which the third channel is the 5 MHz channel whose channel number is 148 for description.

For example, when the bandwidth of the second channel is 165 MHz, the value of the first information is 3, the quantity of first subfields in the at least one first subfield is 2, and the quantity of second subfields in the at least one second subfield is 3. For example, as shown in Table 7, the at least one first subfield may include a first RU allocation subfield and a second RU allocation subfield, and the at least one second subfield may include a third RU allocation subfield, a fourth RU allocation subfield, and a fifth RU allocation subfield. An EHT-SIG content channel 1 includes the first RU allocation subfield to the fifth RU allocation subfield, and an EHT-SIG content channel 2 includes the first RU allocation subfield, the second RU allocation subfield, the fourth RU allocation subfield, and the fifth RU allocation subfield. A 1^{st} second subfield in the at least one second subfield (namely, the third RU allocation subfield on the EHT-SIG content channel 1) corresponds to the third channel. An RU allocation subfield shown in Table 7 may indicate an RU allocation scheme of a 165 MHz channel at the bottom of FIG. 4D.

**Table 7**

| Bandwidth of a channel | RU allocation subfield | Subcarrier range corresponding to an RU | |
|---|---|---|---|
| 165 MHz | | Center frequency is 5730 MHz | Center frequency is 5735 MHz |
| | First RU allocation subfield in an EHT-SIG content channel 1 | [-1012: -771] | [-1076: -835] |
| | First RU allocation subfield in an EHT-SIG content channel 2 | [-765: -524] | [-829: -588] |
| | Second RU allocation subfield in the EHT-SIG content channel 1 | [-500: -259] | [-564: -323] |
| | Second RU allocation subfield in the EHT-SIG content channel 2 | [-253: -12] | [-317: -76] |
| | Third RU allocation subfield in the EHT-SIG content channel 1 | [1: 64], to be specific, [12: 37] and [39: 64] | [-64: -1]; to be specific, [-64: -39] and [-37: -12] |
| | Fourth RU allocation subfield in the EHT-SIG content channel 1 | [76: 317] | [12: 253] |
| | Fourth RU allocation subfield in the EHT-SIG content channel 2 | [323: 564] | [259: 500] |
| | Fifth RU allocation subfield in the EHT-SIG content channel 1 | [588: 829] | [524: 765] |
| | Fifth RU allocation subfield in the EHT-SIG content channel 2 | [835: 1076] | [771: 1012] |

For another example, when the bandwidth of the second channel is 325 MHz, the value of the first information is 7, the quantity of first subfields in the at least one first subfield is 2, and the quantity of second subfields in the at least one second subfield is 7. For example, as shown in Table 8, the at least one first subfield may include a first RU allocation subfield and a second RU allocation subfield, and the at least one second subfield may include a third RU allocation subfield to a ninth RU allocation subfield. An EHT-SIG content channel 1 includes the first RU allocation subfield to the ninth RU allocation subfield, and an EHT-SIG content channel 2 includes the first RU allocation subfield to a sixth RU allocation subfield, and an eighth RU allocation subfield to the ninth RU allocation subfield. A 5^{th} second subfield in the at least one second subfield (namely, a seventh RU allocation subfield on the EHT-SIG content channel 1) corresponds to the third channel. An RU allocation subfield shown in Table 8 may indicate an RU allocation scheme of a 325 MHz channel at the bottom of FIG. 4B

**Table 8**

| Bandwidth of a channel | RU allocation subfield | Subcarrier range corresponding to an RU |
|---|---|---|
| 325 MHz | First RU allocation subfield in an EHT-SIG content channel 1 | [-2036: -1795] |
| | First RU allocation subfield in an EHT-SIG content channel 2 | [-1789: -1548] |
| | Second RU allocation subfield in the EHT-SIG content channel 1 | [-1524: -1283] |
| | Second RU allocation subfield in the EHT-SIG content channel 2 | [-1277: -1036] |
| | Third RU allocation subfield in the EHT-SIG content channel 1 | [-1012: -771] |
| | Third RU allocation subfield in the EHT-SIG content channel 2 | [-765: -524] |
| | Fourth RU allocation subfield in the EHT-SIG content channel 1 | [-500: -259] |
| | Fourth RU allocation subfield in the EHT-SIG content channel 2 | [-253: -12] |
| | Fifth RU allocation subfield in the EHT-SIG content channel 1 | [12: 253] |
| | Fifth RU allocation subfield in the EHT-SIG content channel 2 | [259: 500] |
| | Sixth RU allocation subfield in the EHT-SIG content channel 1 | [524: 765] |
| | Sixth RU allocation subfield in the EHT-SIG content channel 2 | [771: 1012] |
| | Seventh RU allocation subfield in the EHT-SIG content channel | [1024: 1087]; to be specific, [1026: 1051] and [1061: 1086]; or [1027: 1052] and [1060: 1085]; or [1029: 1054] and [1058: 1083] |
| | Eighth RU allocation subfield in the EHT-SIG content channel 1 | [1100: 1341] |
| | Eighth RU allocation subfield in the EHT-SIG content channel 2 | [1347: 1588] |
| | Ninth RU allocation subfield in the EHT-SIG content channel 1 | [1612: 1853] |
| | Ninth RU allocation subfield in the EHT-SIG content channel 2 | [1859: 2100] |

According to this method, the first device may accurately indicate the RU allocation scheme of the channel whose bandwidth is 165 MHz or 325 MHz.

Optionally, the first message in S305 and the data on the second channel may be simultaneously sent, or may be separately sent. This is not limited in this application.

Optionally, if the frequency range of the second channel has an intersection with both the second frequency range and the third frequency range, and the frequency range of the second channel includes the first frequency range, the first device may determine a center frequency of the second channel in one of the following manners before sending the data to the second device on the second channel. For specific content of the first frequency range, the second frequency range, and the third frequency range, refer to the foregoing descriptions. Details are not described herein again. A frequency in the second frequency range is less than a frequency in the third frequency range.

Manner 1: When a frequency range of a primary 20 MHz channel falls within the second frequency range, the center frequency of the second channel is a minimum frequency in the first frequency range.

For example, the second channel is the 160 MHz or 165 MHz channel whose channel number is 132. That is, the frequency range of the second channel is 5650 MHz to 5810 MHz or 5650 MHz to 5815 MHz, the first frequency range is 5730 MHz to 5735 MHz, the second frequency range is 5470 MHz to 5720 MHz, and the third frequency range is 5720 MHz to 5850 MHz. In this case, the center frequency of the second channel is 5730 MHz.

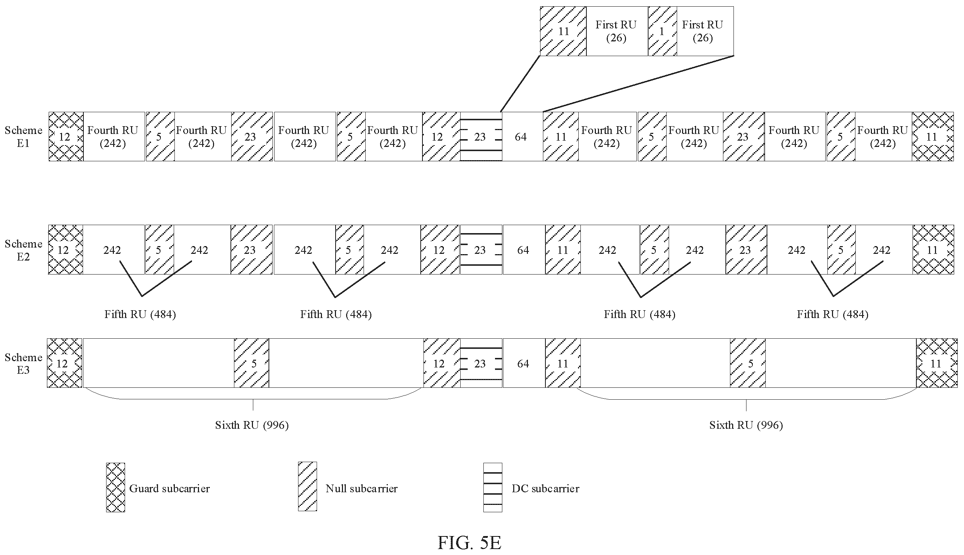

Optionally, in this example, the first device may map the data to the RU of the second channel based on the RU allocation scheme of the second channel. The RU allocation scheme of the second channel may be any scheme shown in FIG. 5E. In FIG. 5E, a number in a block represents a quantity of subcarriers. The following separately describes schemes shown in FIG. 5E.

A scheme E1 is a 242-tone scheme. In other words, one RU may include a maximum of 242 subcarriers. In the scheme E1, the second channel includes a plurality of guard subcarriers, a plurality of DC subcarriers, a plurality of null subcarriers, a plurality of fourth RUs, and a resource #3. The DC subcarriers are on a left side of the resource #3. The resource #3 includes a resource corresponding to the 5 MHz channel whose channel number is 148, and may include 64 subcarriers. Optionally, the resource #3 may include a plurality of null subcarriers and two first RUs. For example, the resource #3 may sequentially include 11 null subcarriers, one first RU, one null subcarrier, and one first RU.

A scheme E2 is a 484-tone scheme. In other words, one RU may include a maximum of 484 subcarriers. In the scheme E2, the second channel includes a plurality of guard subcarriers, a plurality of DC subcarriers, a plurality of null subcarriers, a plurality of fifth RUs, and a resource #3. The DC subcarriers are on a left side of the resource #3.

A scheme E3 is a 996-tone scheme. In other words, one RU may include a maximum of 996 subcarriers. In the scheme E3, the second channel includes a plurality of guard subcarriers, a plurality of DC subcarriers, a plurality of null subcarriers, a plurality of sixth RUs, and a resource #3. The DC subcarriers are on a left side of the resource #3.

In this manner, if an operating frequency of the second device is in the second frequency range, the second device may receive data on the primary 20 MHz channel, so that the second device is compatible with a device whose operating frequency is in the second frequency range.

Manner 2: When a frequency range of a primary 20 MHz channel falls within the third frequency range, the center frequency of the second channel is a maximum frequency in the first frequency range.

For example, the second channel is the 160 MHz or 165 MHz channel whose channel number is 132. That is, the frequency range of the second channel is 5650 MHz to 5810 MHz or 5650 MHz to 5815 MHz, the first frequency range is 5730 MHz to 5735 MHz, the second frequency range is 5470 MHz to 5720 MHz, and the third frequency range is 5720 MHz to 5850 MHz. In this case, the center frequency of the second channel is 5735 MHz.

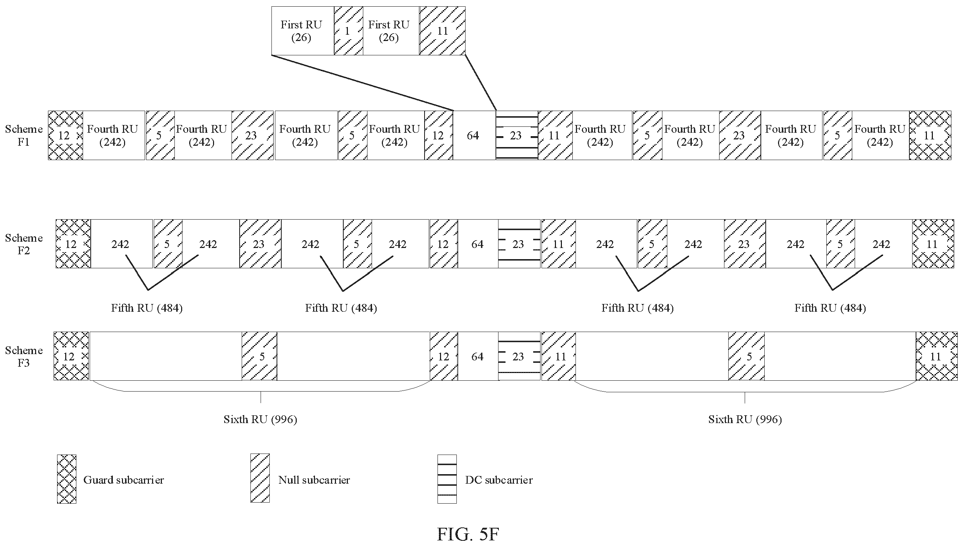

Optionally, in this example, the first device may map the data to the RU of the second channel based on the RU allocation scheme of the second channel. The RU allocation scheme of the second channel may be any scheme shown in FIG. 5F. In FIG. 5F, a number in a block represents a quantity of subcarriers. The following separately describes schemes shown in FIG. 5F.

A scheme F1 is a 242-tone scheme. In other words, one RU may include a maximum of 242 subcarriers. In the scheme F1, the second channel includes a plurality of guard subcarriers, a plurality of DC subcarriers, a plurality of null subcarriers, a plurality of fourth RUs, and a resource #4. The DC subcarriers are on a right side of the resource #4. The resource #4 includes a resource corresponding to the 5 MHz channel whose channel number is 148, and may include 64 subcarriers. Optionally, the resource #4 may include a plurality of null subcarriers and two first RUs. For example, the resource #4 may sequentially include one first RU, one null subcarrier, one first RU, and 11 null subcarriers.

A scheme F2 is a 484-tone scheme. In other words, one RU may include a maximum of 484 subcarriers. In the scheme F2, the second channel includes a plurality of guard subcarriers, a plurality of DC subcarriers, a plurality of null subcarriers, a plurality of fifth RUs, and a resource #4. The DC subcarriers are on a right side of the resource #4.

A scheme F3 is a 996-tone scheme. In other words, one RU may include a maximum of 996 subcarriers. In the scheme F3, the second channel includes a plurality of guard subcarriers, a plurality of DC subcarriers, a plurality of null subcarriers, a plurality of sixth RUs, and a resource #4. The DC subcarriers are on a right side of the resource #4.

In this manner, if an operating frequency of the second device is in the third frequency range, the second device may receive data on the primary 20 MHz channel, so that the second device is compatible with a device whose operating frequency is in the third frequency range.

In some possible manners, the method shown in FIG. 3 further includes:
S306: The first device sends the first data on a sixth channel; and correspondingly, the second device receives the first data on the sixth channel.

The sixth channel includes a first bandwidth and a second bandwidth, and the first data is carried only on the first bandwidth. In other words, the first device sends the first data only by using a resource, on the sixth channel, corresponding to the first bandwidth. A frequency range corresponding to the first bandwidth may be the frequency range corresponding to the first channel. For example, the first bandwidth may be 240 MHz, and the second bandwidth may be 80 MHz. For example, a frequency range of the sixth channel is 5490 MHz to 5810 MHz, the frequency range of the first bandwidth is 5490 MHz to 5730 MHz, a frequency range of the second bandwidth is 5730 MHz to 5810 MHz, and the first device sends the first data only by using a resource that is on the sixth channel and whose frequency range is 5490 MHz to 5730 MHz.

Optionally, when the first device supports the first bandwidth, and the second device does not support the first bandwidth but supports a third bandwidth, the first device may perform S306. The third bandwidth is a sum of the first bandwidth and the second bandwidth. For example, the first bandwidth is 240 MHz, the second bandwidth is 80 MHz, and the third bandwidth is 320 MHz. When the first device supports the 240 MHz bandwidth, and the second device does not support the 240 MHz bandwidth but supports the 320 MHz bandwidth, the first device performs S306.

In some possible manners, the first device is an AP, and the second device is a STA (for example, an EHT STA). The manner may include step A1:
A1: The first device sends a beacon frame to the second device; and correspondingly, the second device receives the beacon frame from the first device.

The beacon frame may indicate the sixth channel. In this case, the first device may announce, by using the beacon frame, that the first device is to send the first data by using the third bandwidth.

Optionally, step A1 is performed before S306.

In S306, after receiving the beacon frame, the second device may receive the first data on the third bandwidth of the sixth channel. In this case, the second device operates on a channel of the third bandwidth. That is, a filter bandwidth of the second device is the third bandwidth.

For example, the frequency range of the first bandwidth is 5490 MHz to 5730 MHz, and the frequency range of the second bandwidth is 5730 MHz to 5810 MHz. The AP sends the data on a resource, on the sixth channel, corresponding to 5490 MHz to 5730 MHz. The filter bandwidth of the STA is 320 MHz. In this case, the STA may receive data sent by the AP on a sixth channel whose bandwidth is 320 MHz, and obtain the data on the resource, on the sixth channel, corresponding to 5490 MHz to 5730 MHz.

In some other possible manners, the first device is a STA (for example, an EHT STA), and the second device is an AP. In S306, the first device may adjust a filter bandwidth to match the first bandwidth, so as to send the data by using the first bandwidth of the sixth channel; and the second device may set a bandwidth capability of a beacon frame to the third bandwidth, and receive the first data on the first bandwidth of the sixth channel through a sixth channel of the third bandwidth.

For example, the frequency range of the first bandwidth is 5490 MHz to 5730 MHz, and the frequency range of the second bandwidth is 5730 MHz to 5810 MHz. The filter bandwidth of the STA is 240 MHz. In this case, the STA may send the data on a resource, on the sixth channel, corresponding to 5490 MHz to 5730 MHz. The bandwidth capability of the beacon frame of the AP is 320 MHz. In this case, the AP may receive data sent by the STA on a sixth channel whose bandwidth is 320 MHz, and obtain the data on the resource, on the sixth channel, corresponding to 5490 MHz to 5730 MHz.

In this manner, the STA may adjust the filter bandwidth to match the first bandwidth, so that an anti-interference capability of the STA can be improved.

Optionally, in this application, any one of S301 and S303 to S306 may exist independently, or S301 and S303 to S306 may be combined in any manner. In addition, a sequence of performing any two of steps S301, S303, S304, and S306 is not limited in this application.

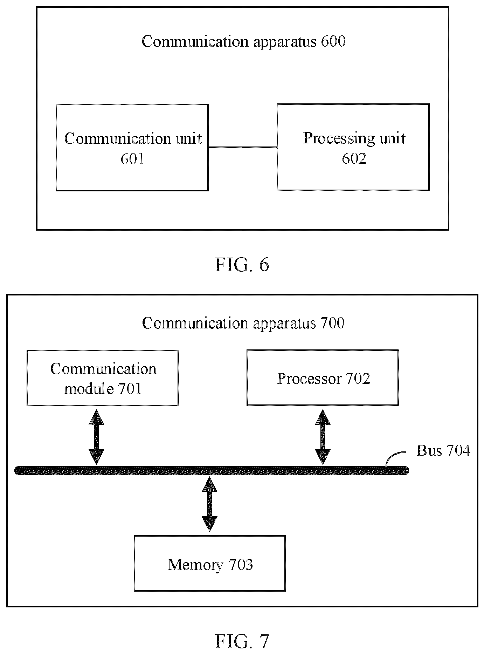

Based on a same technical concept as the method embodiment in FIG. 3, an embodiment of this application provides a communication apparatus in FIG. 6, and the communication apparatus may be configured to perform functions of related steps in the foregoing method embodiment. The functions may be implemented by hardware, or may be implemented by software or by hardware executing corresponding software. The hardware or the software includes one or more modules corresponding to the foregoing functions. A structure of the communication apparatus is shown in FIG. 6, and the communication apparatus includes a communication unit 601 and a processing unit 602. The communication apparatus 600 may be used in the AP or the STA in the communication system shown in FIG. 1, and may implement the communication method provided in the foregoing embodiment and instances of this application. The following describes functions of the units in the communication apparatus 600.

The communication unit 601 is configured to receive and send data. The communication unit 601 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 602 may be configured to support the communication apparatus 600 in performing processing actions in the foregoing method embodiment. The processing unit 602 may be implemented by using a processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 600 is used in the first device in the embodiment of this application shown in FIG. 3. The following describes specific functions of the processing unit 602 in this implementation.

The processing unit 602 is configured to: send first data to a second device on a first channel by using the communication unit 601, where the first channel falls within a 5 GHz frequency band, and a bandwidth of the first channel is greater than or equal to 240 MHz. The communication unit 601 receives second data from the second device.

In some possible manners, the processing unit 602 is further configured to send a first message by using the communication unit 601. The first message includes first information indicating a bandwidth of a second channel. When a value of the first information is a first value, the bandwidth of the second channel is 160 MHz or 165 MHz; when a value of the first information is a second value, the bandwidth of the second channel is 240 MHz; or when a value of the first information is a third value, the bandwidth of the second channel is 320 MHz or 325 MHz.

Optionally, the first message further includes at least one first subfield and at least one second subfield, and the at least one first subfield and the at least one second subfield jointly indicate a resource unit RU allocation scheme of the second channel.

In an example, when the value of the first information is the first value, a quantity of first subfields in the at least one first subfield is 2, and a quantity of second subfields in the at least one second subfield is 2 or 3; when the value of the first information is the second value, a quantity of first subfields in the at least one first subfield is 2, and a quantity of second subfields in the at least one second subfield is 4; or when the value of the first information is the third value, a quantity of first subfields in the at least one first subfield is 2, and a quantity of second subfields in the at least one second subfield is 7.

Optionally, when the quantity of second subfields in the at least one second subfield is 3 or 7, one or more second subfields in the at least one second subfield correspond to a third channel, and a frequency range of the third channel falls within a frequency range of the second channel.

In an implementation, a frequency range of the first channel includes a first frequency range; and the processing unit 602 is specifically configured to send the first data to the second device by using the communication unit 601 and by using a resource, on the first channel, other than a resource corresponding to the first frequency range.

In another implementation, a frequency range of a fourth channel includes the first frequency range; and the processing unit 602 is further configured to send third data to the second device by using the communication unit 601 and by using a resource, on the fourth channel, other than a resource corresponding to the first frequency range. A bandwidth of the fourth channel is less than 240 MHz.

In some possible manners, the frequency range of the third channel is a fifth frequency range, and the third channel is used to transmit at least one of the following services: a QoS service and a time-sensitive service.

In some other possible manners, a frequency range of a fifth channel includes a first frequency range, and a bandwidth of the fifth channel is one of the following: 20 MHz, 40 MHz, 80 MHz, 160 MHz, 240 MHz and 320 MHz.

Optionally, the first frequency range is one of the following: 5710 MHz to 5730 MHz, 5730 MHz to 5735 MHz, and 5710 MHz to 5735 MHz.

For example, the bandwidth of the second channel is 165 MHz, 240 MHz, or 325 MHz, and the second channel includes at least one of the following:
at least one first RU, where the first RU includes 26 consecutive subcarriers;
at least one second RU, where the second RU includes 52 consecutive subcarriers;
at least one third RU, where the third RU includes 106 consecutive subcarriers;
at least one fourth RU, where the fourth RU includes 242 consecutive subcarriers;
at least one fifth RU, where the fifth RU includes 484 subcarriers;
at least one sixth RU, where the sixth RU includes 996 subcarriers;
at least one seventh RU, where the seventh RU includes 2×996 subcarriers;
at least one eighth RU, where the eighth RU includes 3×996 subcarriers; and
at least one ninth RU, where the ninth RU includes 4×996 subcarriers.

In some possible manners, the processing unit 602 is further configured to send the first data on a sixth channel by using the communication unit 601. The sixth channel includes a first bandwidth and a second bandwidth, and the first data is carried only on the first bandwidth.

Optionally, the first device is an access point. Before sending the first data on the sixth channel, the processing unit 602 is further configured to send a beacon frame to the second device by using the communication unit 601. The beacon frame indicates the sixth channel.

For example, the first bandwidth is 240 MHz, and the second bandwidth is 80 MHz.

In another implementation, the communication apparatus 600 is used in the second device in the embodiment of this application shown in FIG. 3. The following describes specific functions of the processing unit 602 in this implementation.

The processing unit 602 is configured to: receive first data from a first device on a first channel by using the communication unit 601, where the first channel falls within a 5 GHz frequency band, and a bandwidth of the first channel is greater than or equal to 240 MHz; and send second data to the first device by using the communication unit 601.

In some possible manners, the processing unit 602 is further configured to receive a first message by using the communication unit 601. The first message includes first information indicating a bandwidth of a second channel. When a value of the first information is a first value, the bandwidth of the second channel is 160 MHz or 165 MHz; when a value of the first information is a second value, the bandwidth of the second channel is 240 MHz; or when a value of the first information is a third value, the bandwidth of the second channel is 320 MHz or 325 MHz.

Optionally, the first message further includes at least one first subfield and at least one second subfield, and the at least one first subfield and the at least one second subfield jointly indicate a resource unit RU allocation scheme of the second channel.

In an example, when the value of the first information is the first value, a quantity of first subfields in the at least one first subfield is 2, and a quantity of second subfields in the at least one second subfield is 2 or 3; when the value of the first information is the second value, a quantity of first subfields in the at least one first subfield is 2, and a quantity of second subfields in the at least one second subfield is 4; or when the value of the first information is the third value, a quantity of first subfields in the at least one first subfield is 2, and a quantity of second subfields in the at least one second subfield is 7.

Optionally, when the quantity of second subfields in the at least one second subfield is 3 or 7, one or more second subfields in the at least one second subfield correspond to a third channel, and a frequency range of the third channel falls within a frequency range of the second channel.

In an implementation, a frequency range of the first channel includes a first frequency range; and the processing unit 602 is specifically configured to receive the first data from the first device by using the communication unit 601 and by using a resource, on the first channel, other than a resource corresponding to the first frequency range.

In another implementation, a frequency range of a fourth channel includes the first frequency range; and the processing unit 602 is further configured to receive third data from the first device by using the communication unit 601 and by using a resource, on the fourth channel, other than a resource corresponding to the first frequency range. A bandwidth of the fourth channel is less than 240 MHz.

In some possible manners, the frequency range of the third channel is a fifth frequency range, and the third channel is used to transmit at least one of the following services: a QoS service and a time-sensitive service.

In some other possible manners, a frequency range of a fifth channel includes a first frequency range, and a bandwidth of the fifth channel is one of the following: 20 MHz, 40 MHz, 80 MHz, 160 MHz, 240 MHz and 320 MHz.

Optionally, the first frequency range is one of the following: 5710 MHz to 5730 MHz, 5730 MHz to 5735 MHz, and 5710 MHz to 5735 MHz.

For example, the bandwidth of the second channel is 165 MHz, 240 MHz, or 325 MHz, and the first channel includes at least one of the following:
at least one first RU, where the first RU includes 26 consecutive subcarriers;
at least one second RU, where the second RU includes 52 consecutive subcarriers;
at least one third RU, where the third RU includes 106 consecutive subcarriers;
at least one fourth RU, where the fourth RU includes 242 consecutive subcarriers;
at least one fifth RU, where the fifth RU includes 484 consecutive subcarriers;
at least one sixth RU, where the sixth RU includes 996 subcarriers;
at least one seventh RU, where the seventh RU includes 2×996 subcarriers;
at least one eighth RU, where the eighth RU includes 3×996 subcarriers; and
at least one ninth RU, where the ninth RU includes 4×996 subcarriers.

In some possible manners, the processing unit 602 is further configured to receive the first data on a sixth channel by using the communication unit 601. The sixth channel includes a first bandwidth and a second bandwidth, and the first data is carried only on the first bandwidth.

Optionally, the second device is a client. Before receiving the first data on the sixth channel, the processing unit 602 is further configured to receive a beacon frame from the first device by using the communication unit 601. The beacon frame indicates the sixth channel.

For example, the first bandwidth is 240 MHz, and the second bandwidth is 320 MHz.

It should be noted that, in the foregoing embodiments of this application, module division is an example, is merely logical function division, and may be other division during actual implementation. In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of software product. The computer software product is stored in a storage medium and includes several instructions for instructing a computer device (which may be a personal computer, a server, or a network device) or a processor (processor) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 7, and the communication apparatus may be configured to perform related steps in the foregoing method embodiment. The communication apparatus may be used in the AP or the STA in the communication system shown in FIG. 1, may implement the communication method provided in the foregoing embodiment and instances of this application, and has functions of the communication apparatus shown in FIG. 6. Refer to FIG. 7. The communication apparatus 700 includes a communication module 701, a processor 702, and a memory 703. The communication module 701, the processor 702, and the memory 703 are connected to each other.

Optionally, the communication module 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

The communication module 701 is configured to receive and send data, to implement communication and interaction with another device. For example, the communication module 701 may be implemented by using a physical interface, a communication module, a communication interface, or an input/output interface.

The processor 702 may be configured to support the communication apparatus 700 in performing processing actions in the foregoing method embodiment. When the communication apparatus 700 is configured to implement the foregoing method embodiment, the processor 702 may be further configured to implement functions of the foregoing processing unit 602. The processor 702 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 700 is used in the first device in the embodiment of this application shown in FIG. 3. The processor 702 is specifically configured to: send first data to a second device on a first channel by using the communication module 701, where the first channel falls within a 5 GHz frequency band, and a bandwidth of the first channel is greater than or equal to 240 MHz. The communication module 701 receives second data from the second device.

In another implementation, the communication apparatus 700 is used in the second device in the embodiment of this application shown in FIG. 3. The processor 702 is specifically configured to: receive first data from a first device on a first channel by using the communication module 701, where the first channel falls within a 5 GHz frequency band, and a bandwidth of the first channel is greater than or equal to 240 MHz; and send second data to the first device by using the communication module 701.

For specific functions of the processor 702, refer to the descriptions in the communication method provided in the foregoing embodiment and instances of this application, and the specific function descriptions of the communication apparatus 600 in the embodiment of this application shown in FIG. 6. Details are not described herein again.

The memory 703 is configured to store program instructions, data, and the like. Specifically, the program instructions may include program code, and the program code includes computer operation instructions. The memory 703 may include a RAM, and may further include a non-volatile memory (non-volatile memory), for example, at least one magnetic disk memory. The processor 702 executes the program instructions stored in the memory 703, and uses the data stored in the memory 703, to implement the foregoing function, so as to implement the communication method provided in the foregoing embodiment of this application.

It may be understood that the memory 703 in FIG. 7 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. Through example but not limitative descriptions, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and method described in this specification includes but is not limited to these and any memory of another proper type.

Based on the foregoing embodiments, an embodiment of this application further provides a computer program. When the computer program is run on a computer, the computer is enabled to perform the method provided in the foregoing embodiment.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiment.

The storage medium may be any usable medium that can be accessed by the computer. The following provides examples but does not impose a limitation: The computer-readable medium may include a RAM, a ROM, an EEPROM, a CD-ROM or another optical disc storage, a magnetic disk storage medium or another magnetic storage device, or any other medium that can carry or store expected program code in a form of instruction or data structure and can be accessed by the computer.

Based on the foregoing embodiments, an embodiment of this application further provides a chip. The chip is configured to read a computer program stored in a memory, to implement the method provided in the foregoing embodiment.

Based on the foregoing embodiments, an embodiment of this application provides a chip system. The chip system includes a processor configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete device.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware-only embodiment, software-only embodiment, or embodiment with a combination of software and hardware. In addition, this application may use a form of computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Obviously, a person skilled in the art may make various modifications and variations to this application without departing from the scope of this application. This application is intended to cover these modifications and variations of this application provided that they fall within the scope of protection defined by the claims of this application and their equivalent technologies.

## Claims

1. A communication method, applied to a first device or a chip in a first device, comprising:
sending first data to a second device on a first channel, wherein the first channel falls within a 5 gigahertz GHz frequency band, and a bandwidth of the first channel is greater than or equal to 240 megahertz MHz; and
receiving second data from the second device.

2. The method according to claim 1, further comprising:
sending a first message, wherein the first message comprises first information indicating a bandwidth of a second channel; and
when a value of the first information is a first value, the bandwidth of the second channel is 160 MHz or 165 MHz;
when a value of the first information is a second value, the bandwidth of the second channel is 240 MHz; or
when a value of the first information is a third value, the bandwidth of the second channel is 320 MHz or 325 MHz.

3. The method according to claim 2, wherein the first message further comprises at least one first subfield and at least one second subfield, and the at least one first subfield and the at least one second subfield jointly indicate a resource unit RU allocation scheme of the second channel.

4. The method according to claim 3, wherein
when the value of the first information is the first value, a quantity of first subfields in the at least one first subfield is 2, and a quantity of second subfields in the at least one second subfield is 2 or 3;
when the value of the first information is the second value, a quantity of first subfields in the at least one first subfield is 2, and a quantity of second subfields in the at least one second subfield is 4; or
when the value of the first information is the third value, a quantity of first subfields in the at least one first subfield is 2, and a quantity of second subfields in the at least one second subfield is 7.

5. The method according to claim 4, wherein
when the quantity of second subfields in the at least one second subfield is 3 or 7, one or more second subfields in the at least one second subfield correspond to a third channel, and a frequency range of the third channel falls within a frequency range of the second channel.

6. The method according to any one of claims 1 to 5, wherein a frequency range of the first channel comprises a first frequency range;
the sending first data to a second device on a first channel comprises:
sending the first data to the second device by using a resource, on the first channel, other than a resource corresponding to the first frequency range.

7. The method according to any one of claims 1 to 6, wherein a frequency range of a fourth channel comprises the first frequency range, and the method further comprises:
sending third data to the second device by using a resource, on the fourth channel, other than a resource corresponding to the first frequency range, wherein a bandwidth of the fourth channel is less than 240 MHz.

8. The method according to any one of claims 1 to 7, wherein the frequency range of the third channel is a fifth frequency range, and the third channel is used to transmit at least one of the following services: a quality of service QoS service and a time-sensitive service.

9. The method according to any one of claims 1 to 5, wherein a frequency range of a fifth channel comprises a first frequency range, and a bandwidth of the fifth channel is one of the following: 20 MHz, 40 MHz, 80 MHz, 160 MHz, 240 MHz and 320 MHz.

10. The method according to any one of claims 6, 7, and 9, wherein the first frequency range is one of the following:
5710 MHz to 5730 MHz, 5730 MHz to 5735 MHz, and 5710 MHz to 5735 MHz.

11. The method according to any one of claims 1 to 10, wherein the bandwidth of the second channel is 165 MHz, 240 MHz, or 325 MHz, and the second channel comprises at least one of the following:
at least one first RU, wherein the first RU comprises 26 consecutive subcarriers;
at least one second RU, wherein the second RU comprises 52 consecutive subcarriers;
at least one third RU, wherein the third RU comprises 106 consecutive subcarriers;
at least one fourth RU, wherein the fourth RU comprises 242 consecutive subcarriers;
at least one fifth RU, wherein the fifth RU comprises 484 subcarriers;
at least one sixth RU, wherein the sixth RU comprises 996 subcarriers;
at least one seventh RU, wherein the seventh RU comprises 2×996 subcarriers;
at least one eighth RU, wherein the eighth RU comprises 3×996 subcarriers; and
at least one ninth RU, wherein the ninth RU comprises 4×996 subcarriers.

12. The method according to any one of claims 1 to 11, further comprising:
sending the first data on a sixth channel, wherein the sixth channel comprises a first bandwidth and a second bandwidth, and the first data is carried only on the first bandwidth.

13. The method according to claim 12, wherein the first device is an access point, and before the sending the first data on a sixth channel, the method further comprises:
sending a beacon frame to the second device, wherein the beacon frame indicates the sixth channel.

14. The method according to claim 12 or 13, wherein the first bandwidth is 240 MHz, and the second bandwidth is 80 MHz.

15. A communication method, applied to a second device or a chip in the second device, comprising:
receiving first data from a first device on a first channel, wherein the first channel falls within a 5 gigahertz GHz frequency band, and a bandwidth of the first channel is greater than or equal to 240 megahertz MHz; and
sending second data to the first device.

16. The method according to claim 15, further comprising:
receiving a first message, wherein the first message comprises first information indicating a bandwidth of a second channel; and
when a value of the first information is a first value, the bandwidth of the second channel is 160 MHz or 165 MHz;
when a value of the first information is a second value, the bandwidth of the second channel is 240 MHz; or
when a value of the first information is a third value, the bandwidth of the second channel is 320 MHz or 325 MHz.

17. The method according to claim 16, wherein the first message further comprises at least one first subfield and at least one second subfield, and the at least one first subfield and the at least one second subfield jointly indicate a resource unit RU allocation scheme of the second channel.

18. The method according to claim 17, wherein
when the value of the first information is the first value, a quantity of first subfields in the at least one first subfield is 2, and a quantity of second subfields in the at least one second subfield is 2 or 3;
when the value of the first information is the second value, a quantity of first subfields in the at least one first subfield is 2, and a quantity of second subfields in the at least one second subfield is 4; or
when the value of the first information is the third value, a quantity of first subfields in the at least one first subfield is 2, and a quantity of second subfields in the at least one second subfield is 7.

19. The method according to claim 18, wherein
when the quantity of second subfields in the at least one second subfield is 3 or 7, one or more second subfields in the at least one second subfield correspond to a third channel, and a frequency range of the third channel falls within a frequency range of the second channel.

20. The method according to any one of claims 15 to 19, wherein a frequency range of the first channel comprises a first frequency range; and
the receiving first data from a first device on a first channel comprises:
receiving the first data from the first device by using a resource, on the first channel, other than a resource corresponding to the first frequency range.

21. The method according to any one of claims 15 to 20, wherein a frequency range of a fourth channel comprises the first frequency range, and the method further comprises:
receiving third data from the first device by using a resource, on the fourth channel, other than a resource corresponding to the first frequency range, wherein a bandwidth of the fourth channel is less than 240 MHz.

22. The method according to any one of claims 15 to 21, wherein the frequency range of the third channel is a fifth frequency range, and the third channel is used to transmit at least one of the following services: a quality of service QoS service and a time-sensitive service.

23. The method according to any one of claims 15 to 19, wherein a frequency range of a fifth channel comprises a first frequency range, and a bandwidth of the fifth channel is one of the following: 20 MHz, 40 MHz, 80 MHz, 160 MHz, 240 MHz and 320 MHz.

24. The method according to any one of claims 20, 21, and 23, wherein the first frequency range is one of the following:
5710 MHz to 5730 MHz, 5730 MHz to 5735 MHz, and 5710 MHz to 5735 MHz.

25. The method according to any one of claims 15 to 24, wherein the bandwidth of the second channel is 165 MHz, 240 MHz, or 325 MHz, and the first channel comprises at least one of the following:
at least one first RU, wherein the first RU comprises 26 consecutive subcarriers;
at least one second RU, wherein the second RU comprises 52 consecutive subcarriers;
at least one third RU, wherein the third RU comprises 106 consecutive subcarriers;
at least one fourth RU, wherein the fourth RU comprises 242 consecutive subcarriers;
at least one fifth RU, wherein the fifth RU comprises 484 consecutive subcarriers;
at least one sixth RU, wherein the sixth RU comprises 996 subcarriers;
at least one seventh RU, wherein the seventh RU comprises 2×996 subcarriers;
at least one eighth RU, wherein the eighth RU comprises 3×996 subcarriers; and
at least one ninth RU, wherein the ninth RU comprises 4×996 subcarriers.

26. The method according to any one of claims 15 to 25, further comprising:
receiving the first data on a sixth channel, wherein the sixth channel comprises a first bandwidth and a second bandwidth, and the first data is carried only on the first bandwidth.

27. The method according to claim 26, wherein the second device is a client, and before the receiving the first data on a sixth channel, the method further comprises:
receiving a beacon frame from the first device, wherein the beacon frame indicates the sixth channel.

28. The method according to claim 26 or 27, wherein the first bandwidth is 240 MHz, and the second bandwidth is 320 MHz.

29. A communication apparatus, comprising:
a communication unit, configured to receive and send data; and
a processing unit, configured to perform, by using the communication unit, the method according to any one of claims 1 to 28.

30. A chip, wherein the chip is coupled to a memory, and the chip reads a computer program stored in the memory, to perform the method according to any one of claims 1 to 28.
